# EUROPEAN PATENT APPLICATION

(11) **EP 4 645 899 A1**
(43) Date of publication of application: **05.11.2025**
(21) Application number: 24757024.5
(22) Date of filing: 09.01.2024
(51) Int. Cl.: H04R 1/10, H04W 4/80, G06F 3/041, G06F 3/044, H04H 40/18, H04R 1/40, H02J 50/70, H01F 27/28

(54) **ELECTRONIC DEVICE FOR SAFELY SEATING WIRELESS AUDIO DEVICE AND FM RADIO SIGNAL OUTPUTTING METHOD USING SAME**

(30) Priority: 15.02.2023 KR 20230020233; 13.03.2023 KR 20230032464
(71) Applicant: Samsung Electronics Co., Ltd., Suwon-si, Gyeonggi-do 16677 (KR)
(72) Inventor: CHUNG, Changgwon, Suwon-si, Gyeonggi-do 16677 (KR); KIM, Dongjun, Suwon-si, Gyeonggi-do 16677 (KR); KIM, Sohyeon, Suwon-si, Gyeonggi-do 16677 (KR); LEE, Jeonghoon, Suwon-si, Gyeonggi-do 16677 (KR)
(74) Representative: HGF
(86) International application number: PCT/KR2024/000404
(87) International publication number: WO 2024/172293

(57) **Abstract**

According to various embodiments of the present disclosure, an electronic device for safely seating a wireless audio device may comprise: a first housing structure; and a second housing structure rotatably coupled to the first housing structure by using a hinge structure. The electronic device for safely seating a wireless audio device according to an embodiment may comprise a wireless charging coil antenna disposed in an inner space of the first housing structure and wound in a circular shape. The electronic device for safely seating a wireless audio device according to an embodiment may comprise a shielding sheet disposed on the wireless charging coil antenna. The electronic device for safely seating a wireless audio device according to an embodiment may comprise: a printed circuit board disposed on the shielding sheet; and an FM radio receiving coil antenna formed in at least a partial area of the printed circuit board. Various other embodiments other than various embodiments disclosed in this document may be possible.

## Description

### [Technical Field]

Embodiments of the disclosure relate to an electronic device for safely seating a wireless audio device and a method of outputting an FM radio signal by using the same.

### [Background Art]

A wireless audio device may output audio signals received from an external electronic device. For example, the wireless audio device may include two wireless audio devices (e.g., left and right wireless audio devices), and the two wireless audio devices may be safely seated in an electronic device (e.g., a case) to be stored and/or charged.

The electronic device may be equipped with a frequency modulation (FM) radio receiving function. For example, the FM radio receiving function may be used as a means of transmitting information when communication is cut off due to a disaster, such as an earthquake. When listening to FM radio signals through an external electronic device such as a smartphone, the cable of a wired audio device (e.g., earphones) connected via a connector of the external electronic device may be generally used as an antenna for receiving FM radio.

Information described above may be provided as related art for the purpose of assisting in understanding the disclosure. No claim or determination is made as to whether any of the above-described matters is applicable as prior art in relation to the disclosure.

### [Disclosure of Invention]

### [Technical Problem]

However, a wired audio device should be used to use an FM radio receiving function. Compared to wireless audio devices, wired audio devices may restrict the user's freedom of movement.

An electronic device for seating a wireless audio device according to an embodiment of the disclosure may include an FM radio receiving coil antenna capable of receiving an FM radio signal. The electronic device may transmit an FM radio signal received via the FM radio receiving coil antenna to a communicatively connected wireless audio device via short-range communication (e.g., Bluetooth communication), thereby causing the FM radio signal to be output via the wireless audio device.

### [Solution to Problem]

An electronic device for seating a wireless audio device according to an embodiment of the disclosure may include a first housing structure, and a second housing structure rotatably coupled to the first housing structure by using a hinge structure. The electronic device for seating a wireless audio device according to an embodiment may include a wireless charging coil antenna disposed in the inner space of the first housing structure and wound in a circular shape. The electronic device for seating a wireless audio device according to an embodiment may include a shielding sheet disposed on the wireless charging coil antenna. The electronic device for seating a wireless audio device according to an embodiment may include a printed circuit board disposed on the shielding sheet, and an FM radio receiving coil antenna disposed in at least a partial area of the printed circuit board.

The electronic device for seating a wireless audio device according to an embodiment of the disclosure may include a short-range communication circuit, an FM radio receiving circuit, and a processor operatively connected to the short-range communication circuit and the FM radio receiving circuit. According to an embodiment, the processor may detect an input for activating an FM radio receiving function in a state where at least one of a first wireless audio device and a second wireless audio device is worn in a user's ear. According to an embodiment, the processor may activate the FM radio receiving circuit, based on detection of the input for activating the FM radio receiving function. According to an embodiment, the processor may receive an FM radio signal via the activated FM radio receiving circuit. According to an embodiment, the processor may transmit the received FM radio signal to at least one of the first wireless audio device and the second wireless audio device via the short-range communication circuit.

According to an embodiment of the disclosure, a method of outputting an FM radio signal of an electronic device for seating wireless audio devices may include detecting an input for activating an FM radio receiving function in a state where at least one of a first wireless audio device and a second wireless audio device is worn in a user's ear. According to an embodiment, the method of outputting the FM radio signal of the electronic device for seating the wireless audio devices may include activating the FM radio receiving circuit based on detection of the input for activating the FM radio receiving function. According to an embodiment, the method of outputting the FM radio signal of the electronic device for seating the wireless audio devices may include receiving the FM radio signal via the activated FM radio receiving circuit. According to an embodiment, the method of outputting the FM radio signal of the electronic device for seating the wireless audio devices may include transmitting the received FM radio signal to at least one of the first wireless audio device and the second wireless audio device via a short-range communication circuit.

According to an embodiment of the disclosure, a non-transitory computer-readable storage medium (or, a computer program product) for storing one or more programs may be described. The one or more programs according to an embodiment may include an instruction for, when executed by a processor of an electronic device, detecting an input for activating an FM radio receiving function in a state where at least one of a first wireless audio device and a second wireless audio device is worn in a user's ear. The one or more programs according to an embodiment may include an instruction for, when executed by the processor of the electronic device, activating the FM radio receiving circuit based on detection of the input for activating the FM radio receiving function. The one or more programs according to an embodiment may include an instruction for, when executed by the processor of the electronic device, receiving an FM radio signal via the activated FM radio receiving circuit. The one or more programs according to an embodiment may include an instruction for, when executed by the processor of the electronic device, transmitting the received FM radio signal to at least one of the first wireless audio device and the second wireless audio device via a short-range communication circuit.

### [Advantageous Effects of Invention]

An electronic device for seating a wireless audio device according to an embodiment of the disclosure includes an FM radio receiving coil antenna, and enables the transmission of an FM radio signal received via the FM radio receiving coil antenna to the wireless audio device so as to allow the FM radio signal to be output via the wireless audio device, thereby providing freedom of movement to a user.

### [Brief Description of Drawings]

FIG. 1 is a block diagram of an electronic device in a network environment according to an embodiment of the disclosure.
FIG. 2A is a block diagram illustrating an electronic device, a first wireless audio device, a second wireless audio device, and an external electronic device according to an embodiment of the disclosure.
FIG. 2B illustrates a communication connection method among an electronic device, a first wireless audio device, a second wireless audio device, and an external electronic device according to an embodiment of the disclosure.
FIG. 3 illustrates states in which a first wireless audio device and a second wireless audio device are detached from an electronic device and seated in the electronic device according to an embodiment of the disclosure.
FIG. 4 illustrates an FM radio receiving coil antenna arranged in an inner space of an electronic device according to an embodiment of the disclosure.
FIG. 5 illustrates a printed circuit board, an FM radio receiving coil antenna, a wireless charging coil antenna, and/or a shielding sheet, which are arranged in an inner space of an electronic device according to an embodiment of the disclosure.
FIG. 6 is a block diagram illustrating an electronic device according to an embodiment of the disclosure.
FIG. 7 is a block diagram illustrating a wireless audio device (e.g., a first wireless audio device and a second wireless audio device) according to an embodiment of the disclosure.
FIG. 8 is a flowchart illustrating a method of outputting an FM radio signal of an electronic device according to an embodiment of the disclosure.
FIG. 9 illustrates a signal flow among an electronic device, a first wireless audio device, and a second wireless audio device according to an embodiment of the disclosure.
FIG. 10 is a flowchart illustrating a method of outputting an FM radio signal of an electronic device according to an embodiment of the disclosure.
FIG. 11 illustrates a signal flow among an electronic device, a first wireless audio device, and a second wireless audio device according to an embodiment of the disclosure.
FIG. 12 illustrates a method of outputting an FM radio signal of an electronic device according to an embodiment of the disclosure.
FIG. 13A is a flowchart illustrating a method of outputting an FM radio signal of an electronic device according to an embodiment of the disclosure.
FIG. 13B illustrates a signal flow among an electronic device, a first wireless audio device, a second wireless audio device, and an external electronic device according to an embodiment of the disclosure.
FIG. 14A is a flowchart illustrating a method of outputting an FM radio signal of an electronic device according to an embodiment of the disclosure.
FIG. 14B illustrates a signal flow among an electronic device, a first wireless audio device, and a second wireless audio device according to an embodiment of the disclosure.
FIG. 15 illustrates an input circuit of an electronic device according to an embodiment of the disclosure.
FIG. 16 illustrates an operation of an input circuit of an electronic device according to an embodiment of the disclosure.
FIG. 17 illustrates a graph of an operation result of an FM radio receiving circuit of an electronic device according to an embodiment of the disclosure.

### [Mode for the Invention]

Hereinafter, embodiments of the disclosure will be described in detail with reference to the accompanying drawings so that those skilled in the art can easily implement the invention. However, the disclosure may be implemented in various forms and is not limited to the embodiments described herein. In connection with the description of the drawings, the same or similar reference numerals may be used for the same or similar components. In addition, well-known functions and configurations may be omitted in the drawings and related description for clarity and brevity.

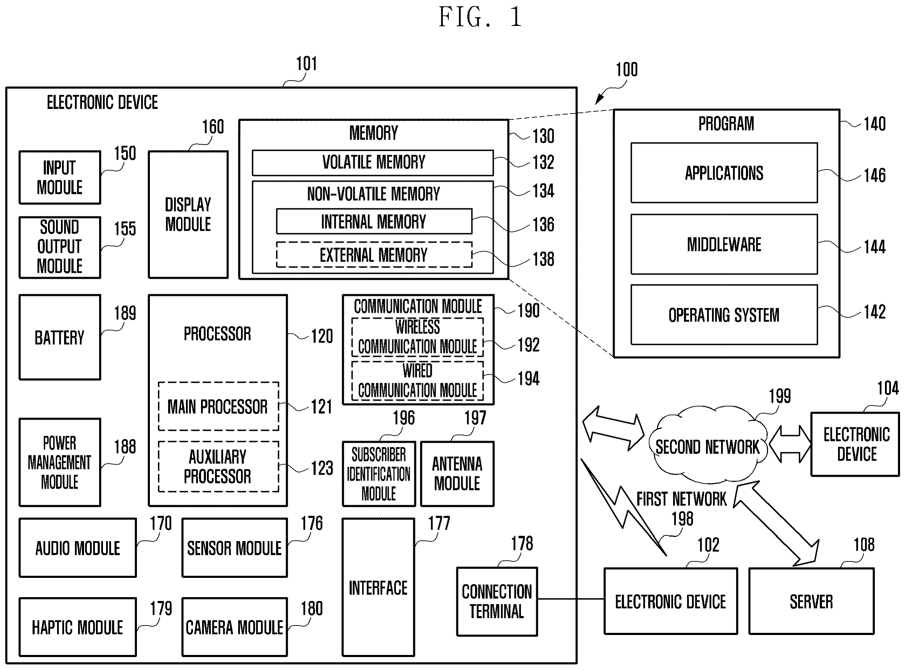

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

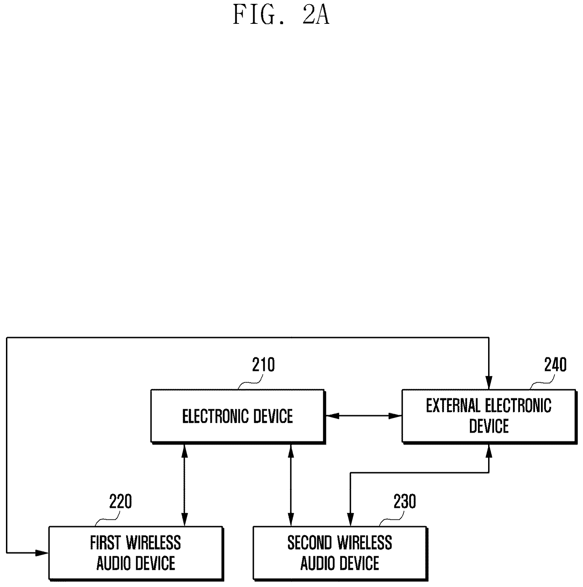

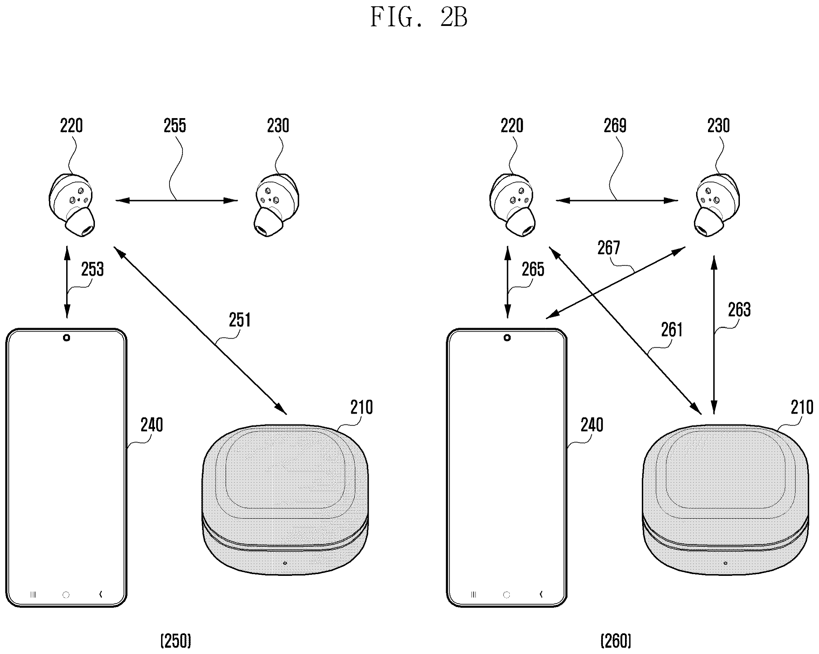

FIG. 2A is a block diagram illustrating an electronic device 210, a first wireless audio device 220, a second wireless audio device 230, and an external electronic device 240 according to an embodiment of the disclosure. FIG. 2B illustrates a communication connection method among the electronic device 210, the first wireless audio device 220, the second wireless audio device 230, and the external electronic device 240 according to an embodiment of the disclosure.

Referring to FIGS. 2A and 2B, the first wireless audio device 220 and the second wireless audio device 230 may be configured as a set and may be ear-wearable type wireless audio devices designed to be worn in the user's ears. For example, the first wireless audio device 220 may be designed to be worn in the user's left ear. The second wireless audio device 230 may be designed to be worn in the user's right ear.

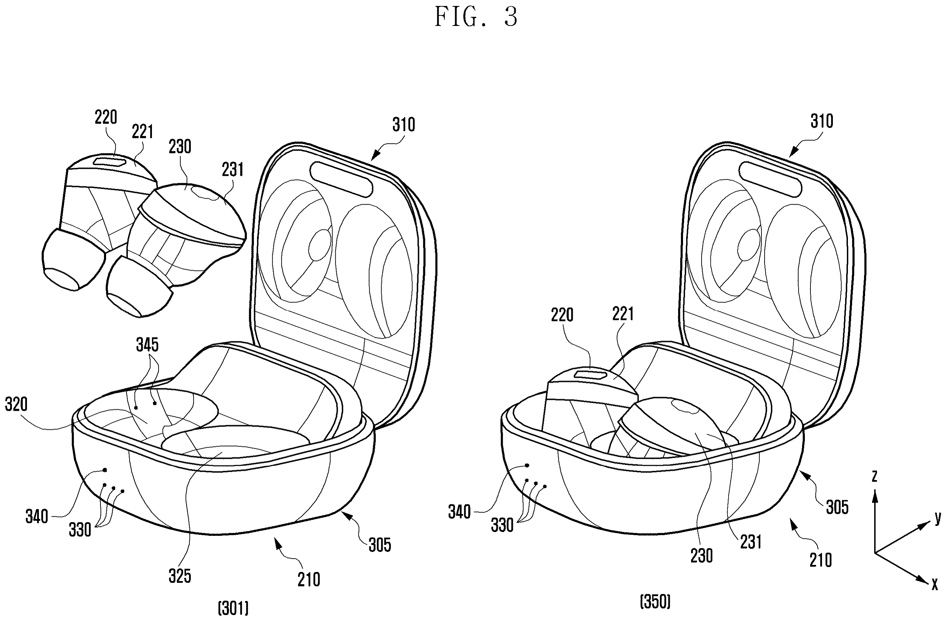

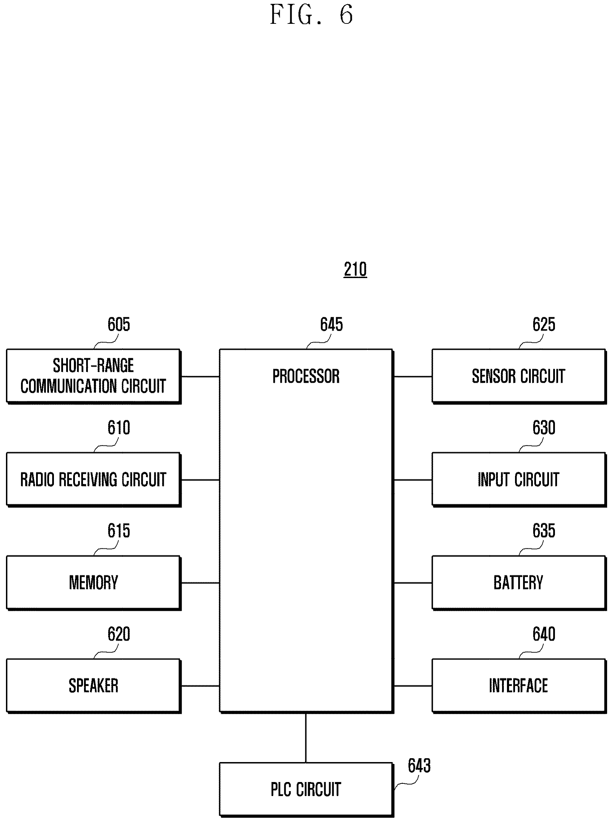

In an embodiment, the electronic device 210 may be a case configured to seat and store the first wireless audio device 220 and the second wireless audio device 230. The electronic device 210 may include an FM radio receiving circuit (e.g., the FM radio receiving circuit 610 of FIG. 6), and may transmit an FM radio signal received via the FM radio receiving circuit 610 to the first wireless audio device 220 and/or the second wireless audio device 230, thereby outputting the FM radio signal via the first wireless audio device 220 and/or the second wireless audio device 230. With respect to the operations of transmitting an FM radio signal received via the FM radio receiving circuit 610 of the electronic device 210 to the first wireless audio device 220 and/or the second wireless audio device 230 and outputting the FM radio signal via the first wireless audio device 220 and/or the second wireless audio device 230, various embodiments will be described below with reference to FIGS. 3 to 17.

In an embodiment, the external electronic device 240 may be the electronic device 101 disclosed in FIG. 1. The external electronic device 240 may transmit an audio signal (e.g., an audio signal according to an incoming call, a message reception, an alarm, or audio playback) according to an event occurring in the external electronic device 240 to the first wireless audio device 220 and/or the second wireless audio device 230, thereby outputting the audio signal via the first wireless audio device 220 and/or the second wireless audio device 230.

In an embodiment, the first wireless audio device 220 and/or the second wireless audio device 230 may be communicatively connected to the electronic device 210 and/or the external electronic device 240 via short-range wireless communication (e.g., Bluetooth, Bluetooth low energy (BLE), Wi-Fi, Wi-Fi direct, Wi-Fi aware, or ultra-wide band (UWB)).

For example, referring to reference numeral <250> of FIG. 2B, one of the first wireless audio device 220 and the second wireless audio device 230, for example, the first wireless audio device 220 may act as a representative and be communicatively connected to the electronic device 210 by using a first communication link 251. The disclosure is not limited thereto, and one of the first wireless audio device 220 and the second wireless audio device 230, for example, the first wireless audio device 220 may act as a representative and be communicatively connected to the external electronic device 240 by using a second communication link 253. The other wireless audio device, for example, the second wireless audio device 230, may be communicatively connected via a third communication link 255 to the first wireless audio device 220 that is communicatively connected to the electronic device 210 or the external electronic device 240. In reference numeral <250> according to various embodiments, it is described that the first wireless audio device 220 acts as a representative and is communicatively connected to the electronic device 210 or the external electronic device 240, but this is not limited thereto. For example, among the first wireless audio device 220 and the second wireless audio device 230, the second wireless audio device 230 may act as a representative and be communicatively connected to the electronic device 210 or the external electronic device 240.

For another example, referring to reference numeral <260> of FIG. 2B, the first wireless audio device 220, which is one of the first wireless audio device 220 and the second wireless audio device 230, may be communicatively connected to the electronic device 210 via a first communication link 261, and the second wireless audio device 230, which is the other of the first wireless audio device 220 and the second wireless audio device 230, may be communicatively connected to the electronic device 210 by using a second communication link 263. The disclosure is not limited thereto, and the first wireless audio device 220, which is one of the first wireless audio device 220 and the second wireless audio device 230, may be communicatively connected to the external electronic device 240 via a third communication link 265, and the second wireless audio device 230, which is the other of the first wireless audio device 220 and the second wireless audio device 230, may be communicatively connected to the external electronic device 240 by using a fourth communication link 267. The first wireless audio device 220 may be communicatively connected to the second wireless audio device 230 by using a fifth communication link 269.

For another example, each of the first wireless audio device 220 and the second wireless audio device 230 may have different media access control (MAC) address (e.g., a Bluetooth MAC address). In this case, each of the first wireless audio device 220 and the second wireless audio device 230 may be independently communicatively connected to the electronic device 210. The disclosure is not limited thereto, and each of the first wireless audio device 220 and the second wireless audio device 230 may also be independently communicatively connected to the external electronic device 240.

FIG. 3 illustrates states in which the first wireless audio device 220 and the second wireless audio device 230 are detached from the electronic device 210 and seated in the electronic device 210 according to an embodiment of the disclosure.

Referring to FIG. 3, the first wireless audio device 220 and the second wireless audio device 230 may be ear-wearable type wireless audio devices designed to be worn in the user's ears. For example, the first wireless audio device 220 may be designed to be worn in the user's left ear, and the second wireless audio device 230 may be designed to be worn in the user's right ear.

Reference numeral <301> according to various embodiments illustrates a state in which the first wireless audio device 220 and/or the second wireless audio device 230 are detached (e.g., separated) from the electronic device 210. Reference numeral <350> according to various embodiments illustrates a state in which the first wireless audio device 220 and/or the second wireless audio device 230 are seated (e.g., accommodated, mounted) in respective grooves (e.g., a first groove 320 and/or a second groove 325) configured in a first housing structure 305.

In an embodiment, the electronic device 210 may include a housing structure configured to have a case shape capable of storing the first wireless audio device 220 and/or the second wireless audio device 230.

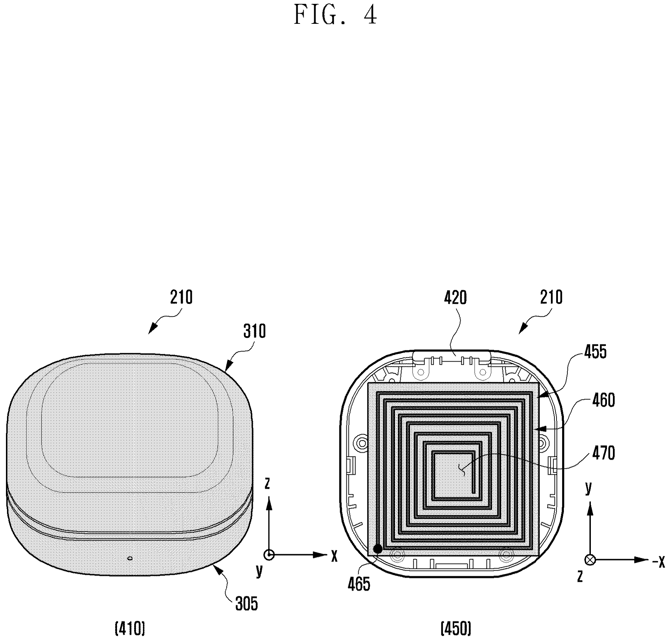

In an embodiment, the housing structure may include a first housing structure 305 having a first groove 320 in which the first wireless audio device 220 may be seated and/or a second groove 325 in which the second wireless audio device 230 may be seated, a second housing structure 310 configured to serve as a cover for the first housing structure 305, and a hinge structure (e.g., a hinge structure 420 of FIG. 4) configured to rotatably connect the first housing structure 305 and the second housing structure 310. For example, in an open state in which the second housing structure 310 configures a predetermined angle with the first housing structure 305, one side of the first housing structure 305 may be connected to one side of the second housing structure 310 via the hinge structure 420. One of the first housing structure 305 and the second housing structure 310 may include a magnet, and the other may include a Hall sensor using the magnet. The electronic device 210 may detect a fastening state (e.g., a closed state) or a release state (e.g., an open state) of the first housing structure 305 and the second housing structure 310 by using the Hall sensor. For example, the electronic device 210 may further include a physical button (not shown) for releasing the fastening of the first housing structure 305 and the second housing structure 310. The fastening between the first and second housing structures 305 and 310 may be released via operation of the physical button (not shown). However, the disclosure is not limited thereto.

In an embodiment, the housing structure 305, 310 of the electronic device 210 may be formed of, for example, coated or colored glass, ceramic, polymer, metal (e.g., aluminum, stainless steel, or magnesium), or a combination of at least two of these materials.

In an embodiment, the electronic device 210 may further include a speaker 330 capable of outputting sound (e.g., FM radio signals). For example, the speaker 330 may be disposed in the inner space of the first housing structure 305 of the electronic device 210 and may be exposed to the external environment through at least one hole arranged in the first housing structure 305.

In an embodiment, the electronic device 210 may include an indicator 340 (e.g., at least one LED device capable of outputting light) that indicates an operational state of the external electronic device 240 (e.g., a state in which power is being supplied to (or the charging of) the first wireless audio device 220 and/or the second wireless audio device 230, or a state in which the first wireless audio device 220 and/or the second wireless audio device 230 is exchanging data (e.g., information of the first wireless audio device 220 and/or the second wireless audio device 230).

In an embodiment, at least one terminal 345 for supplying power to the first wireless audio device 220 may be disposed in the first recess 320 of the first housing structure 305. In addition, in an embodiment, at least one terminal (not shown) for supplying power to the second wireless audio device 230 may be disposed in the second recess 325 of the first housing structure 305.

In an embodiment, the first wireless audio device 220 and/or the second wireless audio device 230 may include a microphone (not shown) capable of receiving input in the form of sound. A touch sensor 221, 231 may be disposed on the opposite surface of an earplug of the first wireless audio device 220 and/or the second wireless audio device 230. A user may control a function of the first wireless audio device 220 and/or the second wireless audio device 230 and/or a function related to FM radio signals (or audio signals) by using the touch sensor 221, 231.

In an embodiment, the first wireless audio devices 220 and the second wireless audio device 230 may include at least one terminal (not shown). Based on physical contact between at least one terminal (not shown) included in first wireless audio devices 220 and the second wireless audio device 230 and at least one terminal 345 disposed in the first recess 320 and second recess 325 of the first housing structure 305 of the electronic device 210, the first wireless audio devices 220 and the second wireless audio device 230 may be electrically connected to the electronic device 210. The electronic device 210 and the first and/or second wireless audio device 220, 230 may establish a communication channel using an electrical path created by an electrical connection. For example, the communication channel between the electronic device 210 and the first and second wireless audio device 220, 230 may be a communication channel implemented via power line communication (PLC).

In an embodiment, although not shown, the electronic device 210 may include a communication circuit (e.g., a short-range communication circuit 605 of FIG. 6) for establishing a communication connection with other electronic devices (e.g., the first wireless audio device 220, the second wireless audio device 230, and/or the external electronic device 240).

FIG. 4 illustrates an FM radio receiving coil antenna 460 arranged in an inner space of the electronic device 210 according to an embodiment of the disclosure.

Referring to FIG. 4, as illustrated in reference numeral <410>, the electronic device 210 may include a housing structure configured to have a case shape capable of storing the first wireless audio device 220 and/or the second wireless audio device 230. For example, the housing structure may include a first housing structure 305 in which the first wireless audio device 220 and/or a second wireless audio device 230 may be seated, and the second housing structure 310 configured to serve as a cover for the first housing structure 305. The first housing structure 305 and the second housing structure 310 may be rotatably coupled by a hinge structure 420.

Reference numeral <450> according to an embodiment illustrates the printed circuit board (PCB) 455 and the FM radio receiving coil antenna 460 which are disposed within the inner space of the first housing structure 305, as viewed from the top of the electronic device 210.

In an embodiment, the printed circuit board 455 may be placed in the inner space of the first housing structure 305 of the electronic device 210. In an embodiment, the FM radio receiving coil antenna 460 may be implemented in a specific pattern on the printed circuit board 455. This is not limited thereto, and the FM radio receiving coil antenna 460 may also be implemented using a separate flexible printed circuit board (FPCB).

In an embodiment, when the FM radio receiving coil antenna 460 is implemented in a specific pattern on the printed circuit board 455, the FM radio receiving coil antenna 460 may be disposed in at least a partial area of one surface (e.g., the surface facing the z-axis direction) of the printed circuit board 455. In an embodiment, the FM radio receiving coil antenna 460 may have an axis substantially parallel to a first direction (e.g., the z-axis direction) (or a second direction (e.g., the - z-axis direction, which is opposite to the z-axis direction)) and may include a planar type (or spiral type) coil wound at least once around the axis to have one or more patterns.

In an embodiment, the FM radio receiving coil antenna 460 may have a first opening 470 having a first designated inner diameter configured about the axis.

In an embodiment, the printed circuit board 455 may further have (or include) a processor, a memory, and/or an interface, which are arranged thereon.

In an embodiment, a feeding unit (feeding point) 465 may be disposed on at least a portion of the printed circuit board 455. The FM radio receiving coil antenna 460 may be electrically fed by the feeding unit 465 based on a control signal transmitted by the electronic device 210 and/or the wireless audio device (e.g., the first wireless audio device 220 and/or the second wireless audio device 230). Based on that the FM radio receiving circuit 610 is powered by the feeding unit 465, the resonant frequency of the FM radio receiving coil antenna 460 may be adjusted, and the FM radio receiving coil antenna 460 may receive an FM radio signal corresponding to the resonant frequency of an FM radio channel.

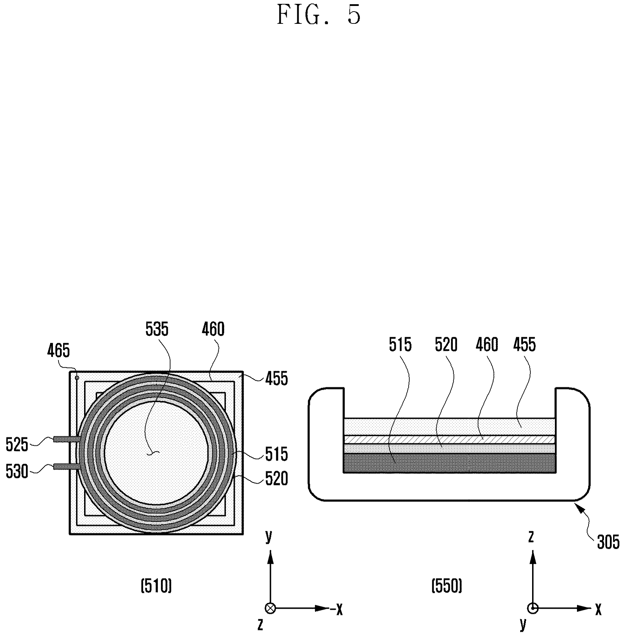

FIG. 5 illustrates a printed circuit board 455, an FM radio receiving coil antenna 460, a wireless charging coil antenna 515, and/or a shielding sheet 520, which are arranged in the inner space of the electronic device 210 according to an embodiment of the disclosure.

Referring to FIG. 5, reference numeral <510> illustrates the printed circuit board 455, the FM radio receiving coil antenna 460, the wireless charging coil antenna 515, and/or the shielding sheet 520, which are arranged in the inner space of the electronic device 210 as viewed in the z-axis direction. Reference numeral <550> illustrates a laminated structure of the printed circuit board 455, the FM radio receiving coil antenna 460, the wireless charging coil antenna 515, and/or the shielding sheet 520, which are arranged in the inner space of the electronic device 210.

In an embodiment, the printed circuit board 455 may be disposed in the inner space of the first housing structure 305 of the electronic device 210. The FM radio receiving coil antenna 460 may be disposed on at least a portion of one surface (e.g., a surface facing the -z-axis direction) of the printed circuit board 455. The disclosure is not limited thereto, and the FM radio receiving coil antenna 460 may also be disposed on at least a portion of the other surface (e.g., a surface facing the z-axis direction, which is the opposite direction to the -z-axis direction) of the printed circuit board 455.

In an embodiment, in the inner space of the first housing structure 305 of the electronic device 210, the printed circuit board 455, the FM radio receiving coil antenna 460, the shielding sheet 520, and/or the wireless charging coil antenna 515 may be sequentially stacked and arranged in the -z-axis direction.

In an embodiment, the shielding sheet 520 may be laminated to one surface (e.g., a surface facing the z-axis direction) of the wireless charging coil antenna 515, and the FM radio receiving coil antenna 460 may be disposed on (e.g., in the z-axis direction) the shielding sheet 520.

In an embodiment, the FM radio receiving coil antenna 460 may be configured in a specific pattern on at least a portion of one surface (e.g., a surface facing the -z-axis direction) of the printed circuit board 455. For example, the FM radio receiving coil antenna 460 may have an axis substantially parallel to the z-axis direction (or the -z-axis direction) and may include a planar type (or spiral type) coil wound at least once around the axis to have one or more patterns.

In an embodiment, the wireless charging coil antenna 515 may have an axis substantially parallel to the z-axis direction (or the -z-axis direction) and may include a planar type (or spiral type) coil wound at least once around the axis to have one or more patterns. The wireless charging coil antenna 515 may have a second opening 535 having a second designated inner diameter configured about the axis.

In an embodiment, when the FM radio receiving coil antenna 460 is disposed to overlap the wireless charging coil antenna 515, the FM radio receiving coil antenna 460 may include a first opening 470 configured to correspond to the second opening 535 of the wireless charging coil antenna 515. In an embodiment, the second designated inner diameter of the second opening 535 of the wireless charging coil antenna 515 may be equal to the first designated inner diameter of the first opening 470 of the FM radio receiving coil antenna 460. However, the disclosure is not limited thereto.

In an embodiment, when the electronic device 210 is wirelessly charged, since the FM radio receiving coil antenna 460 includes the first opening 470, and the wireless charging coil antenna 515 includes the second opening 535, magnetic flux generated during wireless charging may pass through the first opening 470 and the second opening 535, thereby reducing mutual interference between the FM radio receiving coil antenna 460 and the wireless charging coil antenna 515.

In an embodiment, the shielding sheet 520 (or shielding tape) disposed between the FM radio receiving coil antenna 460 and the wireless charging coil antenna 515 may include a protective film and/or a graphite sheet. However, the disclosure is not limited thereto. The shielding sheet 520 according to an embodiment may block (e.g., shield) noise generated by an operating frequency and/or electromagnetic signals transmitted or received via the wireless charging coil antenna 515 from affecting on components arranged in the Z-axis direction, and may focus and transmit a signal (e.g., an electromagnetic signal) transmitted from the wireless charging coil antenna 515 in a specific direction (e.g., the -z-axis direction, the direction in which a signal is emitted toward the outside of the electronic device 210). As a result, the charging efficiency of the wireless charging coil antenna 515 may be improved.

Although the FM radio receiving coil antenna 460 has been described as being implemented in a specific pattern on the printed circuit board (PCB) 455 according to an embodiment, this is not limited thereto. For example, the FM radio receiving coil antenna 460 may also be implemented using a separate FPCB. In this case, as the FM radio receiving coil antenna 460 is disposed at a designated distance from the wireless charging coil antenna 515 with the printed circuit board 455 interposed therebetween, the shielding sheet 520 may be omitted. For example, when the FM radio receiving coil antenna 460 and the wireless charging coil antenna 515 are disposed with the printed circuit board 455 interposed therebetween, the reception of the FM radio signal using the FM radio receiving coil antenna 460 may not be affected by noise generated by the operating frequency and/or electromagnetic signal transmitted or received via the wireless charging coil antenna 515. Accordingly, the shielding sheet 520 may be omitted. However, this is not limited thereto.

In an embodiment, the shielding sheet 520 may include an area substantially equal to the pattern area of the wireless charging coil antenna 515. For example, the shielding sheet 520 may have a shape corresponding to the pattern of the wireless charging coil antenna 515. However, the disclosure is not limited thereto. In an embodiment, the shielding sheet 520 may have a third opening (not shown) having a third designated inner diameter configured about an axis substantially parallel to the z-axis direction (or -z-axis direction). For example, the shielding sheet 520 may have a third opening (not shown) configured to correspond to the second opening 535 of the wireless charging coil antenna 515 when the shielding sheet 520 is arranged to overlap the FM radio receiving coil antenna 460 and the wireless charging coil antenna 515. For example, the third designated inner diameter of the third opening of the shielding sheet 520 may be configured (or changed) in consideration of the efficiency of the FM radio receiving coil antenna 460 and the efficiency of the wireless charging coil antenna 515 (e.g., wireless charging efficiency) in order to reduce mutual interference between the FM radio receiving coil antenna 460 and the wireless charging coil antenna 515.

In an embodiment, the third designated inner diameter of the third opening of the shielding sheet 520 may be equal to or greater than the first designated inner diameter of the first opening 470 of the FM radio receiving antenna 460 and/or the second designated inner diameter of the second opening 535 of the wireless charging coil antenna 515. In an embodiment, when the electronic device 210 is wirelessly charged, power may be applied to the AC input terminal 525, 530 by a power transmitting device (e.g., a wireless charging pad, a tablet, or a smartphone), and a battery (e.g., the battery 635 of FIG. 6) of the electronic device 210 may be charged based on the current flowing through the wireless charging coil antenna 515 due to the power applied to the AC input terminals 525, 530.

FIG. 6 is a block diagram illustrating the electronic device 210 according to an embodiment of the disclosure.

In various embodiments, the electronic device (e.g., the electronic device 210 of FIG. 2) may be a case capable of seating and storing a first wireless audio device (e.g., the first wireless audio device 220 of FIG. 2) and/or a second wireless audio device (e.g., the second wireless audio device 230 of FIG. 2).

Referring to FIG. 6, the electronic device 210 may include a short-range communication circuit 605, an FM radio receiving circuit 610, a memory 615, a speaker 620 (e.g., the speaker 330 of FIG. 3), a sensor circuit 625, an input circuit 630, a battery 635, an interface 640, a power line communication (PLC) circuit 643, and/or a processor 645.

According to an embodiment of the disclosure, the short-range communication circuit 605 may perform data transmission or reception via wireless communication with a wireless audio device (e.g., the first wireless audio device 220 and/or the second wireless audio device 230) and/or an external electronic device (e.g., the external electronic device 240 of FIG. 2).

In an embodiment, the electronic device 210 may transmit an FM radio signal received via the FM radio receiving circuit 610 via the short-range communication circuit 605 to the first wireless audio device 220 and/or the second wireless audio device 230.

According to an embodiment of the disclosure, the FM radio receiving circuit 610 may receive an FM radio signal corresponding to FM radio broadcasting via an antenna (e.g., the FM radio receiving coil antenna 460 of FIG. 4). The FM radio signal received by the FM radio receiving circuit 610 may be implemented as an analog signal. The FM radio receiving coil antenna 460 may be electrically fed via a feeding unit (e.g., the feeding unit 465 of FIG. 4) disposed on at least a portion of the printed circuit board 455, based on the control of a processor 645 that operates according to a control signal transmitted by the electronic device 210 and/or a wireless audio device (e.g., the first wireless audio device 220 and/or the second wireless audio device 230). Based on that the FM radio receiving coil antenna 460 is fed via the feeding unit 465, the resonant frequency of the FM radio receiving coil antenna 460 may be adjusted, allowing the FM radio receiving circuit 610 to receive FM radio signals corresponding to various FM radio channels.

In an embodiment, the FM radio receiving circuit 610 may perform processing on a received FM radio signal and transmit the processed signal to the processor 645. The FM radio receiving circuit 610 may include an analog to digital converter (ADC) that converts an FM radio signal implemented in an analog form into a digital form which is processable by the processor 645. The FM radio receiving circuit 610 may transmit the signal, which is converted into a digital form, to the processor 645.

According to an embodiment of the disclosure, the memory 615 may perform a function for storing a program for processing and control by the processor 645 of the electronic device 210 and/or input/output data associated with commands related to the program, and may store a program for controlling the overall operation of the electronic device 210. The memory 615 may store various instructions that are executable by the processor 645.

According to an embodiment, under the control of the processor 645, the memory 615 may store instructions for identifying whether the wireless audio device is worn in the user's ear, based on sensor information received from the wireless audio device (e.g., the first wireless audio device 220 and the second wireless audio device 230). Under the control of the processor 645, the memory 615 may store instructions for the processor 645 to activate the FM radio receiving circuit 610, based on the detection of an input for activating an FM radio receiving function. Under the control of the processor 645, the memory 615 may store instructions for transmitting an FM radio signal received via the activated FM radio receiving circuit 610 to at least one of the first wireless audio device 220 and the second wireless audio device 230 via the short-range communication circuit 605. Under the control of the processor 645, the memory 615 may store instructions for outputting, via the speaker 620, an FM radio signal received via the FM radio receiving circuit 610. When the electronic device 210 does not include the short-range communication circuit 605 and the speaker 620, the memory 615 may store instructions, under the control of the processor 645, for transmitting an FM radio signal via a wireless audio device (e.g., the first wireless audio device 220 or the second wireless audio device 230) seated in the electronic device 210 to the other wireless audio device (e.g., the second wireless audio device 230 or the first wireless audio device 220), the FM radio signal being received via the FM radio receiving circuit 610.

According to an embodiment of the disclosure, under the control of the processor 645, the speaker 620 (e.g., the speaker 330 of FIG. 3) may output a sound corresponding to an FM radio signal received from the FM radio receiving circuit 610.

According to an embodiment of the disclosure, the sensor circuit 625 may include a Hall sensor (not shown) using magnetism. The Hall sensor may detect an open state and/or a closed state of a cover of the electronic device 210 (e.g., the second housing structure 310 of FIG. 3). The Hall sensor may transmit a sensor signal of the detected open state and/or closed state of the cover of the electronic device 210 to the processor 645.

According to an embodiment of the disclosure, the input circuit 630 may include at least one button for controlling other electronic devices (e.g., the first wireless audio device 220, the second wireless audio device 230, and/or the external electronic device 240) that are communicatively connected via the short-range communication circuit 605 (e.g., controlling an operation of outputting an audio signal or an FM radio signal of the first wireless audio device 220 and/or the second wireless audio device 230, or controlling a communication connection of the external electronic device 240). For example, the at least one button may be implemented as a pressure sensor or a touch sensor, but is not limited thereto.

According to an embodiment of the disclosure, the battery 635 may supply power to at least one component of the wireless audio device (e.g., the first wireless audio device 220 and/or the second wireless audio device 230) and/or the electronic device 210. In an embodiment, the battery 635 may include a non-rechargeable primary battery, a rechargeable secondary battery, and/or a fuel cell.

According to an embodiment of the disclosure, the interface 640 may support one or more designated protocols that may be used for the electronic device 210 to directly or wirelessly connect with the wireless audio device (e.g., the first wireless audio device 220 and/or the second wireless audio device 230) and/or the external electronic device 240. For example, the interface 640 may include an integrated inter-chip sound (I2S) interface and/or an inter-integrated circuit (I2C) interface. Under the control of the processor 645, the integrated inter-chip sound (I2S) interface may transmit an FM radio signal received via the FM radio receiving circuit 610 to the speaker 620. Under the control of the processor 645, the inter-integrated circuit (I2C) interface may transmit a control signal related to the FM radio signal to the FM radio receiving circuit 610 and/or the speaker 620. For example, the control signal associated with an FM radio signal may include, but are not limited to, a control signal associated with changing an FM radio channel, a control signal associated with searching FM radio channels, control signals associated with adjusting the volume of the FM radio signal, a control signal associated with software reset, and/or a control signal for processing an FM radio signal, such as gain adjustment.

According to an embodiment of the disclosure, a power line communication (PLC) circuit 643 may support a communication channel between the electronic device 210 and the wireless audio device (e.g., the first wireless audio device 220 and/or the second wireless audio device 230). For example, based on physical contact between at least one terminal (not shown) included in the wireless audio device (e.g., the first wireless audio device 220 and/or the second wireless audio device 230) and at least one terminal (e.g., at least one terminal 345 of FIG. 3) disposed in the first groove (e.g., the first groove 320 of FIG. 3) and the second groove (e.g., the second groove 325 of FIG. 3) of the first housing structure (e.g., the first housing 305 of FIG. 3) of the electronic device 210, the PLC circuit 643 may support a communication channel implemented as a power line communication (PLC) using an electrical path generated when the wireless audio device (e.g., the first wireless audio device 220 and/or the second wireless audio device 230) is electrically connected to the electronic device 210.

According to an embodiment of the disclosure, the processor 645 may be operatively connected to various electronic components (e.g., the short-range communication circuit 605, the FM radio receiving circuit 610, the memory 615, the speaker 620, the sensor circuit 625, the input circuit 630, the battery 635, the interface 640, and/or the PLC circuit 643) included in the electronic device 210, and may control various components operatively connected to the processor 645.

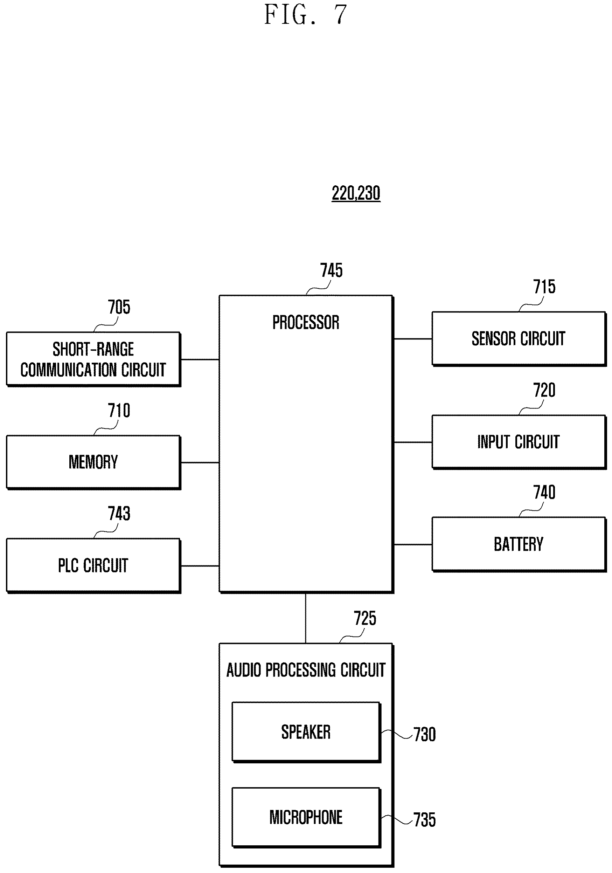

In an embodiment, the processor 645 may detect an input for activating an FM radio receiving function while at least one of the first wireless audio device 220 and the second wireless audio device 230 is worn in the user's ear. For example, an input for activating the FM radio receiving function may include an operation of a physical button (e.g., a key button) provided on the housing structure (e.g., the first housing structure 305 and/or the second housing structure 310 of FIG. 3) of the electronic device 210, a touch input detected via a touch sensor provided on the housing structures 305 and/or 310, a voice input related to activation of the FM radio receiving function, a wireless signal related to activation of the FM radio receiving function (e.g., a signal related to an operation, detected via an input circuit (e.g., the input circuit 720 of FIG. 7) separately provided in the wireless audio device), or a wireless signal related to activation of the FM radio receiving function and received from the external electronic device 240 (e.g., a wireless signal for an input for activating an FM radio receiving function in an application related to the FM radio receiving function and executed on the external electronic device 240).

In an embodiment, based on detection of an input for activating the FM radio receiving function, the processor 645 may activate the FM radio receiving circuit 610 and receive an FM radio signal via the FM radio receiving circuit 610. The processor 645 may transmit the FM radio signal received via the FM radio receiving circuit 610 to at least one of the first wireless audio device 220 and the second wireless audio device 230 via the short-range communication circuit 605 such that at least one of the first wireless audio device 220 and the second wireless audio device 230 outputs the FM radio signal.

In an embodiment, the processor 645 may transfer the FM radio signal received via the FM radio receiving circuit 610 to the speaker 620 via the interface 640 (e.g., an integrated inter-chip sound (I2S) interface), thereby outputting the FM radio signal via the speaker 620. The processor 645 may transmit a control signal related to the FM radio signal (e.g., a control signal associated with changing an FM radio channel, a control signal associated with searching FM radio channels, a control signal associated with adjusting the volume of an FM radio signal, a control signal associated with software reset, and/or a control signal for processing an FM radio signal, such as gain adjustment) to the FM radio receiving circuit 610 and/or the speaker 620 via the interface 640 (e.g., an inter-integrated circuit (I2C) interface).

In an embodiment, when an input for outputting an FM radio signal via at least one of the first wireless audio device 220 and the second wireless audio device 230 is detected, the processor 645 may transmit the FM radio signal to at least one of the first wireless audio device 220 and the second wireless audio device 230 such that at least one of the first wireless audio device 220 and the second wireless audio device 230 outputs the FM radio signal received from the FM radio receiving circuit 610.

In an embodiment, the electronic device 210 may not include the short-range communication circuit 605 and the speaker 620. In this case, when both the first wireless audio device 220 and the second wireless audio device 230 are detached from the electronic device 210 and one of the first wireless audio device 220 and the second wireless audio device 230 is detected as being seated in the electronic device 210, the processor 645 may activate the FM radio receiving circuit 610 and transmit an FM radio signal received via the activated FM radio receiving circuit 610 to the seated wireless audio device (e.g., the first wireless audio device 220 or the second wireless audio device 230) via the PLC circuit 643. For example, the processor 645 may transmit an FM radio signal received via the FM radio receiving circuit 610 to a wireless audio device (e.g., the second wireless audio device 230 or the first wireless audio device 220) that is not seated in the electronic device 210) (e.g., a wireless audio device worn in the user's ear) via a wireless audio device (e.g., the first wireless audio device 220 or the second wireless audio device 230) seated in the electronic device 210, thereby causing the wireless audio device (e.g., the second wireless audio device 230 or the first wireless audio device 220) that is not seated in the electronic device 210 to output the FM radio signal.

The disclosure is not limited thereto, when the electronic device 210 does not include the short-range communication circuit 605 and the speaker 620, the processor 645 may activate the FM radio receiving circuit 610 upon detection of an input for activating the FM radio receiving function, while the first wireless audio device 220 and the second wireless audio device 230 are seated in the electronic device 210. When one of the first wireless audio device 220 and the second wireless audio device 230 seated in the electronic device 210 is detected as being detached from the electronic device 210, the processor 645 may transmit the FM radio signal received via the activated FM radio receiving circuit 610 to the seated wireless audio device (e.g., the first wireless audio device 220 or the second wireless audio device 230) via the PLC circuit 643. The wireless audio device (e.g., the first wireless audio device 220 or the second wireless audio device 230) seated in the electronic device 210 may transmit the FM radio signal received from the electronic device 210 to a wireless audio device (e.g., the second wireless audio device 230 or the first wireless audio device 220) that is not seated in the electronic device 210 via a short-range communication circuit (e.g., a short-range communication circuit 705 of FIG. 7).

The electronic device 210 for seating a wireless audio device 220, 230 according to an embodiment of the disclosure may include a first housing structure 305 and a second housing structure 310 rotatably coupled to the first housing structure 305 by using a hinge structure 420. The electronic device 210 for seating a wireless audio device 220, 230 according to an embodiment may include a wireless charging coil antenna 515 disposed in the inner space of the first housing structure 305 and wound in a circular shape. The electronic device 210 for seating a wireless audio device 220, 230 according to an embodiment may include a shielding sheet 520 disposed on the wireless charging coil antenna 515. According to an embodiment, the electronic device 210 for seating a wireless audio device 220, 230 may include a printed circuit board 455 disposed on the shielding sheet 520. The electronic device 210 for seating a wireless audio device 220, 230 according to an embodiment may include an FM radio receiving coil antenna 460 disposed on at least a portion of the printed circuit board 455.

In an embodiment, the shielding sheet 520 may block the signal transmitted or received via the wireless charging coil antenna 515 from affecting the FM radio receiving coil antenna 460, and transmit the signal transmitted from the wireless charging coil antenna 515 toward the outside of the electronic device 210.

In an embodiment, the shielding sheet 520 may include a protective film and/or a graphite sheet.

The electronic device 210 for seating the wireless audio device 220, 230 according to an embodiment may further include a speaker 330, 620 capable of outputting an FM radio signal received via the FM radio receiving coil antenna 460.

The electronic device 210 for seating the wireless audio device 220, 230 according to an embodiment may further include a feeding unit 465 disposed on at least a portion of the printed circuit board 455.

In an embodiment, the FM radio receiving coil antenna 460 may receive FM radio signals corresponding to various FM radio channels by adjusting the resonant frequency of the FM radio receiving coil antenna 460 based on that FM radio receiving coil antenna 460 is electrically fed by the feeding unit 465.

In an embodiment, the second housing structure 310 may further include at least one electrode 1520, 1530, 1540, 1550 arranged in at least a partial area of one surface thereof.

The electronic device 210 for seating the wireless audio device 220, 230 according to an embodiment may further include a touch circuit 1510 disposed on the printed circuit board 455.

In an embodiment, the at least one electrode 1520, 1530, 1540, 1550 may be electrically connected to the touch circuit 1510 via the flexible printed circuit board (FPCB) 1560.

The electronic device 210 for seating the wireless audio device 220, 230 according to an embodiment may include a short-range communication circuit 605, an FM radio receiving circuit 610, a memory 615 configured to store instructions, and a processor 645. According to an embodiment, the instructions, when executed by the processor 645, may cause the electronic device 210 to detect an input for activating the FM radio receiving function while at least one of the first wireless audio device 220 and the second wireless audio device 230 is worn in the user's ear. According to an embodiment, the instructions, when executed by the processor 645, may cause the electronic device 210 to activate the FM radio receiving circuit 610 based on detection of the input for activating the FM radio receiving function. According to an embodiment, the instructions, when executed by the processor 645, may cause the electronic device 210 to receive an FM radio signal via the activated FM radio receiving circuit 610. According to an embodiment, the instructions, when executed by the processor 645, may cause the electronic device 210 to transmit the FM radio signal received via the FM radio receiving circuit 610 to at least one of the first wireless audio device 220 and the second wireless audio device 230 via the short-range communication circuit 605.

In an embodiment, the input for activating the FM radio receiving function may include an operation of a physical button provided on a first housing structure 305 and/or a second housing structure 310 of the electronic device 210. In an embodiment, the input for activating the FM radio receiving function may include a touch input detected via a touch sensor provided in the first housing structure 305 and/or the second housing structure 310. In an embodiment, the input for activating the FM radio receiving function may include a voice input related to activation of the FM radio receiving function. In an embodiment, the input for activating an FM radio receiving function may include a wireless signal related to the activation of the FM radio receiving function.

According to an embodiment, the instructions, when executed by the processor 645, may cause the electronic device 210 to perform, based on reception of a signal related to control of the FM radio signal, a function corresponding to the signal related to control of the FM radio signal.

In an embodiment, the signal related to control of the FM radio signal may include a signal related to configuration of the strength of the FM radio signal output by the first wireless audio device 220 and/or the second wireless audio device 230. In an embodiment, the signal related to control of the FM radio signal may include a signal related to configuration of an FM radio broadcast channel. In an embodiment, the signal related to control of the FM radio signal may include a signal related to the activation or deactivation of the FM radio receiving function.

According to an embodiment, the instructions, when executed by the processor 645, may cause the electronic device 210 to output the FM radio signal via the speaker 330, 620 by transferring the FM radio signal received via the FM radio receiving circuit 610 to the speaker 330, 620 via the interface 640.

According to an embodiment, the instructions, when executed by the processor 645, may cause the electronic device 210 to transmit the FM radio signal to at least one of the first wireless audio device 220 and the second wireless audio device 230 via the short-range communication circuit 605 when an input for outputting the FM radio signal via at least one of the first wireless audio device 220 and the second wireless audio device 230 is detected while the FM radio signal is output via the speaker 330, 620.

The electronic device 210 for seating the wireless audio device 220, 230 according to an embodiment may further include a touch circuit 1510 and at least one electrode 1520, 1530, 1540, 1550 electrically connected to the touch circuit 1510.

According to an embodiment, the instructions, when executed by the processor 645, may cause the electronic device 210 to detect a capacitance change exceeding a designated threshold at the at least one electrode 1520, 1530, 1540, 1550 via the touch circuit 1510. According to an embodiment, the instructions, when executed by the processor 645, may cause the electronic device 210 to perform a function related to the FM radio signal, which is mapped to the at least one electrode 1520, 1530, 1540, 1550 in which the capacitance change exceeding the designated threshold has been detected.

FIG. 7 is a block diagram illustrating a wireless audio device (e.g., the first wireless audio device 220 and the second wireless audio device 230) according to an embodiment of the disclosure.

In various embodiments, the wireless audio device may include a first wireless audio device (e.g., the first wireless audio device 220 of FIG. 2) and a second wireless audio device (e.g., the second wireless audio device 230 of FIG. 2). The first wireless audio device 220 and the second wireless audio device 230 may be configured as a set and may be ear-wearable type wireless audio devices designed to be worn in the user's ears. For example, the first wireless audio device 220 may be designed to be worn in the user's left ear, and the second wireless audio device 230 may be designed to be worn in the user's right ear.

Referring to FIG. 7, the wireless audio device (e.g., the first wireless audio device 220 and/or the second wireless audio device 230) may include a short-range communication circuit 705, a memory 710, a sensor circuit 715, an input circuit 720, an audio processing circuit 725, a battery 740, a power line communication (PLC) circuit 743, and/or a processor 745.

According to an embodiment of the disclosure, the short-range communication circuit 705 may establish a communication channel among the wireless audio device (e.g., the first wireless audio device 220 or the second wireless audio device 230) and the electronic device 210 (e.g., a case) and/or the external electronic device 240 (e.g., a smartphone), and may support communication performance via the established communication channel.

According to an embodiment of the disclosure, the memory 710 may perform a function for storing a program for processing and control by the processor 745 of the wireless audio device (e.g. the first wireless audio device 220 and/or the second wireless audio device 230) and/or input/output data associated with commands related to the program, and may store a program for controlling the overall operation of the wireless audio device (e.g. the first wireless audio device 220 and/or the second wireless audio device 230). The memory 710 may store various instructions which are executable by the processor 745.

In an embodiment, under the control of the processor 745, the memory 710 may store instructions for outputting, via the speaker 730, an FM radio signal received from the electronic device 210.

In an embodiment, under the control of the processor 745, the memory 710 of a wireless audio device (e.g., the first wireless audio device 220 or the second wireless audio device 230) may store instructions for transmitting an FM radio signal received from the electronic device 210 to the other wireless audio device (e.g., the second wireless audio device 230 or the first wireless audio device 220). Under the control of the processor 745, the memory 710 of the other wireless audio device (e.g., the second wireless audio device 230 or the first wireless audio device 220) may store instructions for outputting, via the speaker 730, the FM radio signal received from the wireless audio device (e.g., the first wireless audio device 220 or the second wireless audio device 230).

According to an embodiment of the disclosure, the sensor circuit 715 may include a proximity sensor, a grip sensor, an acceleration sensor, and/or a gyro sensor.

In an embodiment, the sensor circuit 715 may obtain, by using the proximity sensor and/or the grip, sensor a sensor signal indicating whether the wireless audio device (e.g., the first wireless audio device 220 and/or the second wireless audio device 230) is worn in a part (e.g., an ear) of the user's body or removed from a part of the user's body. For example, the proximity sensor may obtain a sensor signal based on a return signal generated by emitting an electromagnetic field or electromagnetic wave (e.g., infrared rays). The grip sensor may acquire a sensor signal based on changes in capacitance or dielectric constant. The sensor circuit 715 may transmit a sensor signal obtained using the proximity sensor and/or the grip sensor to the processor 745. The processor 745 may identify whether the wireless audio device (e.g., the first wireless audio device 220 and/or the second wireless audio device 230) is worn in or removed from a part of the user's body, based on the sensor signal obtained using the proximity sensor and/or the grip sensor.

The disclosure is not limited thereto, and the acceleration sensor and the gyro sensor may configure a 6-axis sensor. The 6-axis sensor may detect movement of the wireless audio device (e.g., the first wireless audio device 220 and/or the second wireless audio device 230). The 6-axis sensor may include an inertial sensor. For example, the acceleration sensor may measure force acting in the directions of three axes, which is the x-axis, y-axis, and z-axis. The gyro sensor may detect pitch, roll, and yaw by using three axes to measure angular velocity. The acceleration sensor and the gyro sensor may transmit sensor information on the detected movement of the wireless audio device to the processor 745. The processor 745 may identify whether the wireless audio device is worn in or removed from a part of the user's body, based on sensor information on the movement of the wireless audio device, the sensor information being received from the acceleration sensor and the gyro sensor.

According to an embodiment of the disclosure, the input circuit 720 may include a touch pad (e.g., the touch sensor 221, 231 of FIG. 3). The wireless audio device, for example, the first wireless audio device 220 and/or the second wireless audio device 230, may detect a user input, such as a user touch and/or a button input, via the input circuit 720. The processor 745 may transmit a control signal related to a function of the external electronic device 240 (e.g., connecting or disconnecting a phone call) and/or a control signal related to audio playback (e.g., pause, fast forward, or rewind) to the external electronic device 240, based on the user input detected via the input circuit 720. In addition, the processor 745 may transmit a control signal related to the FM radio signal (e.g., a control signal related to change of an FM radio channel, a control signal related to retrieval of an FM radio channel, a control signal related to adjustment of the volume of an FM radio signal, a control signal related to software reset, and/or a control signal for processing an FM radio signal, such as gain adjustment) to the electronic device 210, based on a user input detected via the input circuit 720.

According to an embodiment of the disclosure, the audio processing circuit 725 may include a speaker 730 and/or a microphone 735.

In an embodiment, under the control of the processor 745, the speaker 730 may output an FM radio signal received from the communicatively connected electronic device 210. However, the disclosure is not limited thereto, and under the control of the processor 745, the speaker 730 may output an audio signal (e.g., an audio signal according to an incoming call, a message reception, an alarm, or audio playback) in response to an event occurring in the external electronic device 240, the audio signal being received from the communicatively connected external electronic device 240.

In an embodiment, the microphone 735 may include a plurality of microphones. For example, the plurality of microphones may include a first microphone (e.g., an in-ear microphone) (not shown), a second microphone (e.g., an outer microphone) (not shown), and/or a third microphone (e.g., an outer microphone) (not shown). In an embodiment, one of the plurality of microphones, for example, the first microphone (e.g., the in-ear microphone), may be seated inside each of the first wireless audio device 220 and the second wireless audio device 230, and may detect body-conducted sound or in-ear resonance sound. In an embodiment, at least one other microphone among the plurality of microphones, for example, the second microphone and/or the third microphone (e.g., the outer microphone), may receive an ambient sound signal of the first wireless audio device 220 and/or the second wireless audio device 230.

According to an embodiment of the disclosure, the battery 740 may supply power to at least one component of the wireless audio device (e.g., the first wireless audio device 220 and/or the second wireless audio device 230). In an embodiment, the battery 740 may include a non-rechargeable primary battery, a rechargeable secondary battery, or a fuel cell.

According to an embodiment of the disclosure, the power line communication (PLC) circuit 743 may support a communication channel between the wireless audio device (e.g., the first wireless audio device 220 and/or the second wireless audio device 230) and the electronic device 210. For example, based on physical contact between at least one terminal (not shown) included in the wireless audio device (e.g., the first wireless audio device 220 and/or the second wireless audio device 230) and at least one terminal (e.g., at least one terminal 345 of FIG. 3) disposed in the first groove (e.g., the first groove 320 of FIG. 3) and the second groove (e.g., the second groove 325 of FIG. 3) of the first housing structure (e.g., the first housing 305 of FIG. 3) of the electronic device 210, the PLC circuit 743 may support a communication channel implemented as power line communication (PLC) using an electrical path generated when the wireless audio device (e.g., the first wireless audio device 220 and/or the second wireless audio device 230) is electrically connected to the electronic device 210.

According to an embodiment of the disclosure, the processor 745 may execute software (e.g., a program) to control at least one other component (e.g., a hardware or software component) of the wireless audio device (e.g., the first wireless audio device 220 and/or the second wireless audio device 230) connected to the processor 745, and may perform various data processing or calculations.

In an embodiment, the processor 745 may output, via the speaker 730, an FM radio signal received from the electronic device 210 via the short-range communication circuit 705. In an embodiment, when a voice command is received via the microphone 735 while the processor 745 is communicatively connected to the electronic device 210, the processor 745 may transmit the received voice command to the electronic device 210. This is not limited thereto, and when a voice command is received via the microphone 735 while the processor 745 is communicatively connected to the external electronic device 240, the processor 745 may transmit the received voice command to the external electronic device 240.

In an embodiment, the processor 745 of the wireless audio device (e.g., the first wireless audio device 220 or the second wireless audio device 230) may transmit an FM radio signal received from the electronic device 210 to the other wireless audio device (e.g., the second wireless audio device 230 or the first wireless audio device 220). The other wireless audio device (e.g., the second wireless audio device 230 or the first wireless audio device 220) may output, via the speaker 730, an FM radio signal received from the wireless audio device (e.g., the first wireless audio device 220 or the second wireless audio device 230).

In an embodiment, the processor 745 may output, via the speaker 730, an audio signal (e.g., an audio signal (e.g., an audio signal according to an incoming call, a message reception, an alarm, or audio playback) in response to an event occurring in the external electronic device 240) received from the external electronic device 240.

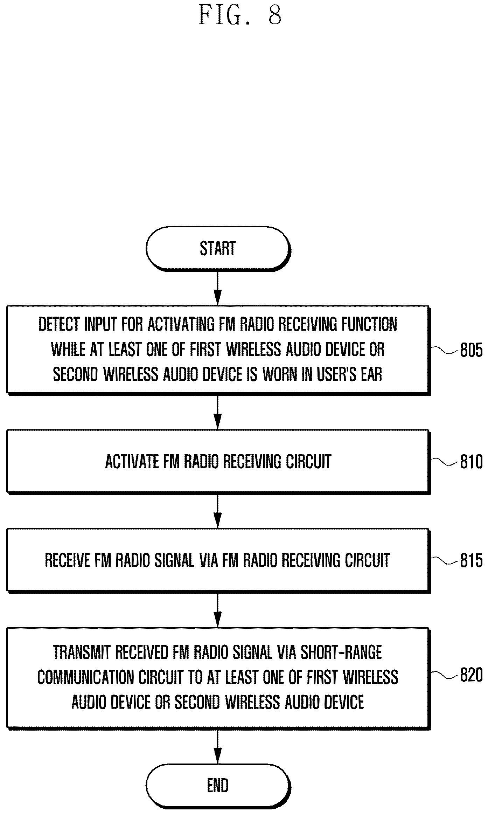

FIG. 8 is a flowchart illustrating a method of outputting an FM radio signal of the electronic device 210 according to an embodiment of the disclosure.

In the following embodiments, the respective operations may be performed sequentially, but are not necessarily performed in that order. For example, the order of the operations may be changed, and at least two operations may be performed in parallel.

According to an embodiment, operations 805 to 820 may be understood as being performed by the processor of the electronic device (e.g., the processor 645 of the electronic device 210 of FIG. 6).

In FIG. 8 according to various embodiments, the electronic device 210 may include a short-range communication circuit (e.g., the short-range communication circuit 605 of FIG. 6). The short-range communication circuit 605 may include a Bluetooth communication circuit. However, this is not limited thereto. The electronic device 210 may perform wireless communication with wireless audio devices, for example, the first wireless audio device (e.g., the wireless audio device 220 of FIG. 2) and the second wireless audio device (e.g., the wireless audio device 230 of FIG. 2), via the short-range communication circuit 605.

In an embodiment, in operation 805, the processor 645 may detect an input for activating the FM radio receiving function while at least one of the first wireless audio device 220 and the second wireless audio device 230 is worn in the user's ear.

In an embodiment, the processor 645 may receive, via the short-range communication circuit 605, information indicating whether the first wireless audio device 220 and/or the second wireless audio device 230 are worn in the user's ears. For example, each of the first wireless audio device 220 and the second wireless audio device 230 may identify whether at least one of the first wireless audio device 220 and the second wireless audio device 230 is worn in the user's ear, based on sensor information obtained via a sensor circuit (e.g., the sensor circuit 715 of FIG. 7), and may transmit the identified information to the electronic device 210. For example, the sensor information may include sensor information obtained using a proximity sensor, based on an electromagnetic field or electromagnetic wave (e.g., infrared rays) which is emitted and then returned, sensor information obtained using a grip sensor, based on a change in capacitance or dielectric constant, and/or sensor information related to the movement of the wireless audio device.

In an embodiment, the processor 645 may activate an FM radio receiving circuit (e.g., the FM radio receiving circuit 610 of FIG. 6) in operation 810. In an embodiment, the input for activating the FM radio receiving function may include an operation of a physical button (e.g., a key button) provided on the housing structure (e.g., the first housing structure 305 and/or the second housing structure 310 of FIG. 3) of the electronic device 210, a touch input detected via a touch sensor provided on the housing structures 305 and/or 310, a voice input related to activation of an FM radio receiving function, a wireless signal related to activation of the FM radio receiving function (e.g., a signal related to an operation, detected via an input circuit (e.g., the input circuit 720 of FIG. 7) separately provided in the wireless audio device), or a wireless signal related to activation of the FM radio receiving function and received from the external electronic device 240 (e.g., a wireless signal for an input for activating an FM radio receiving function in an application related to the FM radio receiving function and executed on the external electronic device 240).

In an embodiment, the processor 645 may receive the FM radio signal via the FM radio receiving circuit 610 in operation 815. For example, the FM radio receiving circuit 610 may convert the FM radio signal implemented in an analog form into a digital form which is processable by the processor 645 and transmit the signal converted into a digital form to the processor 645.

In an embodiment, the processor 645 may transmit the received FM radio signal via the short-range communication circuit 605 to at least one of the first wireless audio device 220 and the second wireless audio device 230 in operation 820. At least one of the first wireless audio device 220 and the second wireless audio device 230, which has received an FM radio signal, may output, via a speaker (e.g., the speaker 730 of FIG. 7), the FM radio signal received from the electronic device 210.

In an embodiment, although not shown, the processor 645 may receive (or detect) a signal related to control of an FM radio signal. In an embodiment, a signal related to control of an FM radio signal may include a signal related to configuration of the strength (e.g., the volume) of an FM radio signal output by the wireless audio device (e.g., the first wireless audio device 220 and/or the second wireless audio device 230), a signal related to configuration of an FM radio broadcast channel, and a signal related to activation or deactivation of an FM radio receiving function. However, this is not limited thereto.

In an embodiment, the processor 645 may receive a signal related to control of an FM radio signal from the wireless audio device (e.g., the first wireless audio device 220 and/or the second wireless audio device 230). For example, the wireless audio device (e.g., the first wireless audio device 220 and/or the second wireless audio device 230) may include a touchpad (e.g., the input circuit 720 of FIG. 7), and may detect a user input related to control of an FM radio signal via the touchpad. Based on the user input detected via the touchpad, the wireless audio device (e.g., the first wireless audio device 220 and/or the second wireless audio device 230) may transmit a signal related to control of the FM radio signal to the electronic device 210.

The disclosure is not limited thereto. The processor 645 may also detect a signal related to control of an FM radio signal from the input circuit (e.g., the input circuit 630 of FIG. 6) (e.g., a physical button or a touch sensor) separately provided in the housing structure (e.g., the first housing structure 305 and/or the second housing structure 310).

In an embodiment, based on reception (or detection) of a signal related to control of an FM radio signal, the processor 645 may perform a specific operation corresponding to the signal related to control of the FM radio (e.g., an operation of adjusting the volume of an FM radio signal, an operation of adjusting an FM radio frequency, and/or an operation of activating or deactivating an FM radio receiving function).

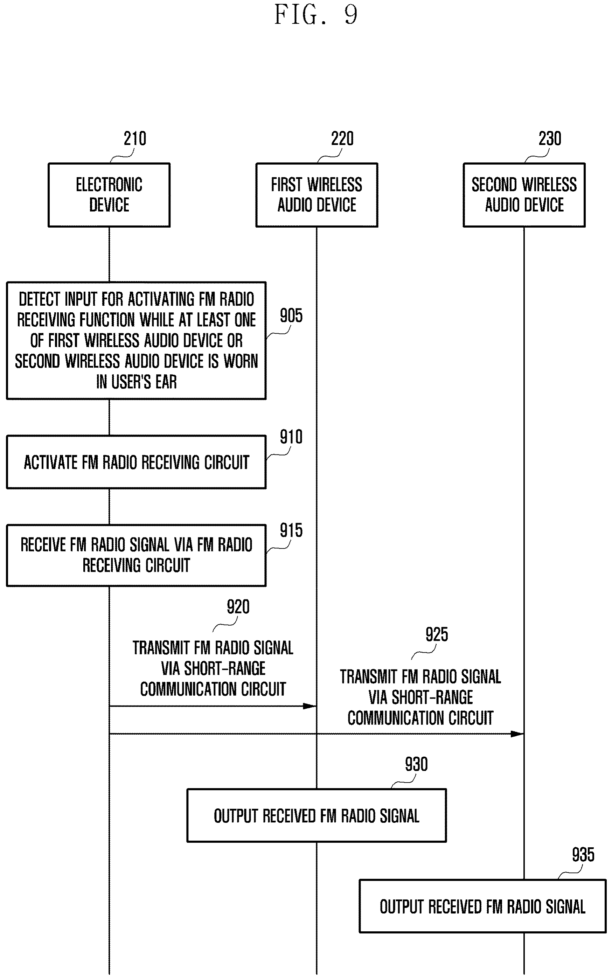

FIG. 9 illustrates a signal flow among the electronic device 210, the first wireless audio device 220, and the second wireless audio device 230 according to an embodiment of the disclosure.

In the following embodiments, the respective operations may be performed sequentially, but are not necessarily performed sequentially. For example, the order of the operations may be changed, and at least two operations may be performed in parallel.

According to an embodiment, operations 905 to 925 may be understood to be performed by a processor (e.g., the processor 645 of FIG. 6) of an electronic device (e.g., the electronic device 210 of FIG. 2). Operation 930 may be understood to be performed by a processor (e.g., the processor 745 of FIG. 7) of a first wireless audio device (e.g., the first wireless audio device 220 of FIG. 2). Operation 935 may be understood to be performed by the processor 745 of a second wireless audio device (e.g., the second wireless audio device 230 of FIG. 2).

Since operations 905 to 925 of FIG. 9 according to various embodiments are substantially the same as operations 805 to 820 of FIG. 8 described above, detailed descriptions thereof may be replaced with the description of FIG. 8.

Referring to FIG. 9, in operation 905, the electronic device 210 may detect an input for activating the FM radio receiving function while at least one of the first wireless audio device 220 and the second wireless audio device 230 is worn in the user's ear. For example, the electronic device 210 may receive a sensor signal detected via a sensor circuit (e.g., the sensor circuit 715 of FIG. 7) of each of the first wireless audio device 220 and the second wireless audio device 230, for example, an acceleration sensor, a gyro sensor, a grip sensor, a temperature sensor, and/or a grip sensor. The electronic device 210 may identify whether at least one of the first wireless audio device 441 and the second wireless audio device 443 is worn in the user's ear, based on a sensor signal received from each of the first wireless audio device 220 and the second wireless audio device 230.

The description with reference to FIG. 9 according to an embodiment is provided under the assumption that the first wireless audio device 220 and the second wireless audio device 230 are worn in the user's ears.

In an embodiment, based on detection of an input for activating the FM radio receiving function, the electronic device 210 may activate the FM radio receiving circuit (e.g., the FM radio receiving circuit 610 of FIG. 6) in operation 910, and may receive an FM radio signal via the FM radio receiving circuit 610 in operation 915. In operation 920, the electronic device 210 may transmit the FM radio signal to the first wireless audio device 220 via the short-range communication circuit (e.g., the short-range communication circuit 605 of FIG. 6). In operation 925, the electronic device 210 may transmit the FM radio signal to the second wireless audio device 230 via the short-range communication circuit 605.

In an embodiment, in operation 930, the first wireless audio device 220 may output, via the speaker (e.g., the speaker 730 of FIG. 7), the FM radio signal received from the electronic device 210. In operation 935, the second wireless audio device 230 may output, via the speaker 730, the FM radio signal received from the electronic device 210.

Although the description with reference to FIG. 9 according to various embodiments has been provided under the assumption that both the first wireless audio device 220 and the second wireless audio device 230 are worn in the user's ears, only one of the first and second wireless audio devices 220 and 230 may be worn.

For example, when it is identified that only the first wireless audio device 220 is worn in the user's left ear, operations 925 and 935 of FIG. 9 may be omitted. In this case, the electronic device 210 may transmit the FM radio signal received via the FM radio receiving circuit 610 only to the first wireless audio device 220 worn in the user's left ear. The first wireless audio device 220 may output, via the speaker 730, the FM radio signal received from the electronic device 210.

In another example, when it is identified that only the second wireless audio device 230 is worn in the user's right ear, operations 920 and 930 of FIG. 9 may be omitted. In this case, the electronic device 210 may transmit the FM radio signal received through the FM radio receiving circuit 610 only to the second wireless audio device 230 worn in the user's right ear. The second wireless audio device 230 may output, via the speaker 730, the FM radio signal received from the electronic device 210.

According to various embodiments, an input for activating the FM radio receiving function may be detected while at least one of the first wireless audio device 220 and the second wireless audio device 230 is worn in the user's ear and is outputting an audio signal received from an external electronic device (e.g., the external electronic device 240 of FIG. 2). In this case, the first wireless audio device 220 and/or the second wireless audio device 230 may stop outputting the audio signal received from the external electronic device 240 and instead output the FM radio signal received from the electronic device 210. However, this is not limited thereto. The external electronic device 240 may output information related to the output of the FM radio signal. For example, the information related to the output of the FM radio signal may include activation information of the FM radio receiving circuit 610 of the electronic device 210 and information for determining whether to output the FM radio signal received via the FM radio receiving circuit 610 of the electronic device 210. However, this is not limited thereto. According to an embodiment, when an input related to the output of the FM radio signal is detected, the external electronic device 240 may transmit the input to the electronic device 210. Based on the input related to the output of the FM radio signal received from the external electronic device 240, the electronic device 210 may activate the FM radio receiving circuit 610 and transmit the FM radio signal received via the FM radio receiving circuit 610 to the wireless audio device (e.g., the first wireless audio device 220 and/or the second wireless audio device 230) that is being worn in the user's ear.

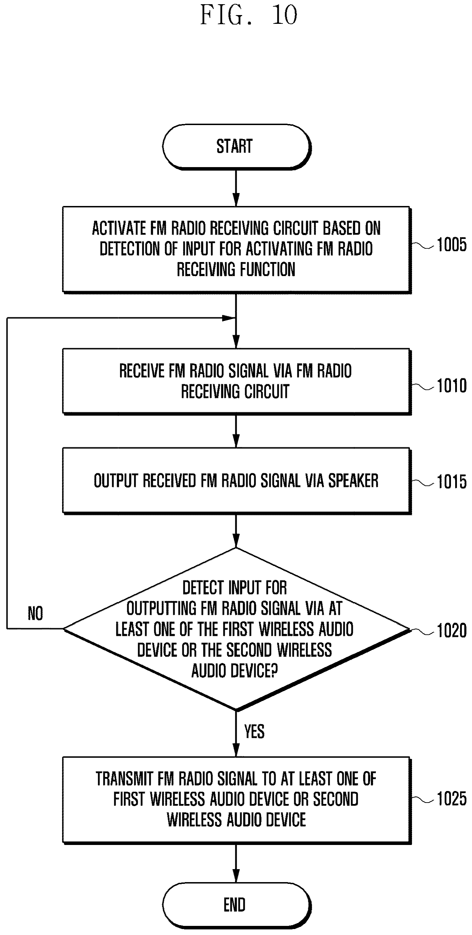

FIG. 10 is a flowchart illustrating a method of outputting an FM radio signal of the electronic device 210 according to an embodiment of the disclosure.

In the following embodiments, respective operations may be performed sequentially, but are not necessarily performed sequentially. For example, the order of the operations may be changed, and at least two operations may be performed in parallel.

According to an embodiment, operations 1005 to 1025 may be understood to be performed by a processor (e.g., the processor 645 of FIG. 6) of an electronic device (e.g., the electronic device 210 of FIG. 6).

In FIG. 10 according to various embodiments, the electronic device 210 may include a speaker (e.g., the speaker 620 of FIG. 6) and may output an FM radio signal via the speaker 620. In this regard, further details will be described in the following description.

In an embodiment, before performing operation 1005 described below, the first wireless audio device (e.g., the first wireless audio device 220 of FIG. 2) and/or the second wireless audio device (e.g., the second wireless audio device 230 of FIG. 2) may be seated in the electronic device 210 or may be detached from the electronic device 210 and worn in the user's ears. Alternatively, the first wireless audio device 220 and the second wireless audio device 230 may be paired with an external electronic device (e.g., the external electronic device 240 of FIG. 2) while being worn in the user's ears, and may be outputting audio signals received from the external electronic device 240.

In an embodiment, in operation 1005, the processor 645 may activate the FM radio receiving circuit (e.g., the FM radio receiving circuit 610 of FIG. 6) based on detection of an input for activating the FM radio receiving function. For example, the input for activating the FM radio receiving function may include an operation of a physical button (e.g., a key button) provided on the housing structure (e.g., the first housing structure 305 and/or the second housing structure 310 of FIG. 3) of the electronic device 210, a touch input detected via a touch sensor provided on the housing structure 305 and/or 310, a voice input related to activation of the FM radio receiving function, a wireless signal related to activation of the FM radio receiving function (e.g., a signal related to an operation, detected via an input circuit (e.g., the input circuit 720 of FIG. 7) separately provided in the wireless audio device), or a wireless signal related to activation of the FM radio receiving function and received from the external electronic device 240 (e.g., a wireless signal generated in response to an input for activating the FM radio receiving function in an application related to the FM radio receiving function and executed on the external electronic device 240).

In an embodiment, the processor 645 may receive an FM radio signal via the FM radio receiving circuit 610 in operation 1010. In an embodiment, the processor 645 may output the received FM radio signal via the speaker 620 in operation 1015.

In an embodiment, the processor 645 may output the FM radio signal via the speaker 620 by transferring the FM radio signal received via the FM radio receiving circuit 610 to the speaker 620 via an interface (e.g., the interface 640 of FIG. 6), for example, an integrated inter-chip sound (I2S) interface.

In an embodiment, the processor 645 may transmit a control signal related to an FM radio signal to the FM radio receiving circuit 610 and/or the speaker 620 via the interface 640 (e.g., an inter-integrated circuit (I2C) interface. For example, the control signal related to the FM radio signal may include a control signal for changing an FM radio channel, a control signal for searching FM radio channels, a control signal for adjusting the volume of the FM radio signal, a control signal related to software reset, and/or a control signal for processing the FM radio signal, such as gain adjustment. However, this is not limited thereto.

In an embodiment, in operation 1020, the processor 645 may identify whether an input for outputting an FM radio signal via at least one of the first wireless audio device 220 and the second wireless audio device 230 is detected.

In an embodiment, when the first wireless audio device 220 and the second wireless audio device 230 are seated in the electronic device 210, an input for outputting an FM radio signal via at least one of the first wireless audio device 220 and the second wireless audio device 230 may include an input for transitioning to a state in which the first wireless audio device 220 and the second wireless audio device 230 are detached from the electronic device 210.

In an embodiment, when the first wireless audio device 220 and the second wireless audio device 230 are detached from the electronic device 210 and worn in the user's ears, or when the first wireless audio device 220 and the second wireless audio device 230 are outputting audio signals received from the external electronic device 240, an input for outputting an FM radio signal via at least one of the first wireless audio device 220 and the second wireless audio device 230 may include an input for outputting an FM radio signal detected via an input circuit (e.g., an input circuit 720 of FIG. 7 (e.g., a touch pad)) included in the first wireless audio device 220 and/or the second wireless audio device 230, an input for outputting an FM radio signal detected via the electronic device 210 (e.g., operation of a physical button (e.g., a key button) provided in the housing structure (e.g., the first housing structure and/or the second housing structure of FIG. 3), a touch input detected via the touch sensor; a voice input related to the activation of the FM radio receiving function, a wireless signal related to the activation of the FM radio receiving function (e.g., a signal related to an operation detected via an input circuit (e.g., the input circuit 720 of FIG. 7) separately provided in the wireless audio device), or a wireless signal related to the activation of the FM radio receiving function and received from the external electronic device 240 (e.g., a wireless signal corresponding to an input for activating the FM radio receiving function in an application related to the FM radio receiving function and executed on the external electronic device 240).

In an embodiment, when an input for outputting an FM radio signal is received via an input circuit 720 (e.g., a touchpad) included in the first wireless audio device 220 and/or the second wireless audio device 230, the first wireless audio device 220 and/or the second wireless audio device 230 may transmit information to the electronic device 210 via the short-range communication circuit 705, the information indicating that an input for outputting an FM radio signal has been received.

In an embodiment, when a wireless signal (e.g., a wireless signal corresponding to an input for activating the FM radio receiving function in an application related to FM radio receiving function and executed on the external electronic device 240) related to activation of an FM radio receiving function received from the external electronic device 240 is received, the external electronic device 240 may transmit information to the electronic device 210 via a short-range communication circuit (e.g., the wireless communication module 192 of FIG. 1), the information indicating that an input for outputting an FM radio signal has been received.

In an embodiment, when an input for outputting an FM radio signal via at least one of the first wireless audio device 220 and the second wireless audio device 230 is detected (e.g., YES in operation 1020), the processor 645 may transmit the FM radio signal to at least one of the first wireless audio device 220 and the second wireless audio device 230 in operation 1025.

In an embodiment, when an input for outputting an FM radio signal via at least one of the first wireless audio device 220 and the second wireless audio device 230 is detected, the processor 645 may transmit the FM radio signal to the first wireless audio device 220 and/or the second wireless audio device 230 via the short-range communication circuit 605, instead of transmitting same to the speaker 620, the FM radio signal being received via the FM radio receiving circuit 610.

This is not limited thereto, and, when an input for outputting an FM radio signal via at least one of the first wireless audio device 220 and the second wireless audio device 230 is detected, the processor 645 may transmit the FM radio signal received via the FM radio receiving circuit 610 to the speaker 620, and further to the first wireless audio device 220 and the second wireless audio device 230. In this case, the FM radio signal may be output not only via the speaker 620 but also via the first wireless audio device 220 and the second wireless audio device 230.

In an embodiment, when an input for outputting an FM radio signal via the first wireless audio device 220 (or the second wireless audio device 230) is detected while an audio signal received from the external electronic device 240 is output via both the first wireless audio device 220 and the second wireless audio device 230, the processor 645 may transmit the FM radio signal only to the first wireless audio device 220 (or the second wireless audio device 230) via the short-range communication circuit 605. In this case, the first wireless audio device 220 (or the second wireless audio device 230) may output the FM radio signal received from the electronic device 210, instead of the audio signal received from the external electronic device 240. The second wireless audio device 230 (or the first wireless audio device 220) may maintain a state of outputting the audio signal received from the external electronic device 240.

In an embodiment, when an input for outputting an FM radio signal via one of the first wireless audio device 220, the second wireless audio device 230, the electronic device 210, and the external electronic device 240 is not detected, (e.g., NO in operation 1020), the processor 645 may branch to operation 1010 and repeatedly perform operations 1010 to 1020.

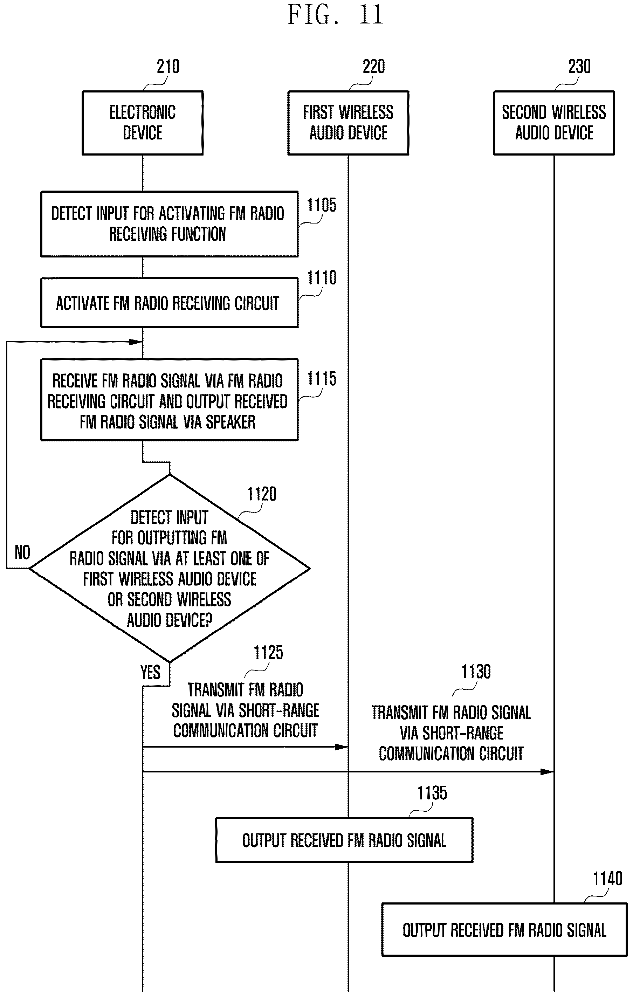

FIG. 11 illustrates a signal flow among the electronic device 210, the first wireless audio device 220, and the second wireless audio device 230 according to an embodiment of the disclosure.

In the following embodiments, respective operations may be performed sequentially, but are not necessarily performed sequentially. For example, the order of the operations may be changed, and at least two operations may be performed in parallel.

According to an embodiment, operations 1105 to 1130 may be understood to be performed by a processor (e.g., the processor 645 of FIG. 6) of an electronic device (e.g., the electronic device 210 of FIG. 2). Operation 1135 may be understood to be performed by a processor (e.g., the processor 745 of FIG. 7) of a first wireless audio device (e.g., the first wireless audio device 220 of FIG. 2). Operation 1140 may be understood to be performed by the processor 745 of a second wireless audio device (e.g., the second wireless audio device 230 of FIG. 2).

Since operations 1105 to 1130 of FIG. 11 according to various embodiments are substantially the same as operations 1005 to 1125 of FIG. 10 described above, a detailed description thereof may be replaced with the description of FIG. 10.

Referring to FIG. 11, in operation 1105, when the electronic device 210 detects an input for activating the FM radio receiving function, the electronic device 210 may activate the FM radio receiving circuit (e.g., the FM radio receiving circuit 610 of FIG. 6) in operation 1110. In operation 1115, the electronic device 210 may receive an FM radio signal via the FM radio receiving circuit 610 and output the received FM radio signal via a speaker (e.g., the speaker 620 of FIG. 6). For example, the electronic device 210 may output the FM radio signal via the speaker 620 by transferring the FM radio signal received via the FM radio receiving circuit 610 to the speaker 620 via an interface (e.g., the interface 640 of FIG. 6), for example, an integrated inter-chip sound (I2S) interface.

In an embodiment, the electronic device 210 may receive (or detect) a control signal related to the FM radio signal, and may transmit the control signal related to the FM radio signal to the FM radio receiving circuit 610 and/or the speaker 620 via the interface 640, for example, an inter-integrated circuit (I2C) interface. For example, the control signal related to the FM radio signal may include a control signal for changing an FM radio channel, a control signal for searching FM radio channels, a control signal for adjusting the volume of an FM radio signal, a control signal related to software reset, and/or a control signal for processing an FM radio signal such as gain adjustment. However, this is not limited thereto.

In an embodiment, in operation 1120, the electronic device 210 may identify whether an input for outputting an FM radio signal via at least one of the first wireless audio device 220 and the second wireless audio device 230 is detected.

The description with reference to FIG. 11 according to an embodiment is provided under the assumption that an input for outputting an FM radio signal via the first wireless audio device 220 and the second wireless audio device 230 is detected.

In an embodiment, when an input for outputting an FM radio signal via at least one of the first wireless audio device 220 and the second wireless audio device 230 is detected (e.g., YES in operation 1120), the electronic device 210 may transmit the FM radio signal to the first wireless audio device 220 via a short-range communication circuit (e.g., the short-range communication circuit 605 of FIG. 6) in operation 1125, and transmit the FM radio signal to the second wireless audio device 230 via the short-range communication circuit 605 in operation 1130. In operation 1135, the first wireless audio device 220 may output, via a speaker (e.g., the speaker 730 of FIG. 7), the FM radio signal received from the electronic device 210. In operation 1140, the second wireless audio device 230 may output, via the speaker 730, the FM radio signal received from the electronic device 210.

The description with reference to FIG. 11 according to various embodiments has been described under the assumption that an input for outputting an FM radio signal via both the first wireless audio device 220 and the second wireless audio device 230 is detected, however, this is not limited thereto. For example, among the first wireless audio device 220 and the second wireless audio device 230, an input for outputting the FM radio signal via the first wireless audio device 220 or the second wireless audio device 230 may also be detected. In this case, the electronic device 210 may transmit the FM radio signal to the first wireless audio device 220 or the second wireless audio device 230 in which the input for outputting the FM radio signal has been detected.

The description with reference to FIGS. 8 through 11 according to various embodiments has been provided under the assumption that, when the electronic device 210 includes the short-range communication circuit 605 and the speaker 620, the electronic device 210 may transmit the FM radio signal to the first wireless audio device 220 and/or the second wireless audio device 230 via the short-range communication circuit 605 such that the FM radio signal is output via the first wireless audio device 220 and/or the second wireless audio device 230, or transmit the FM radio signal to the speaker 620 such that the FM radio signal is output via the speaker 620. However, this is not limited thereto.

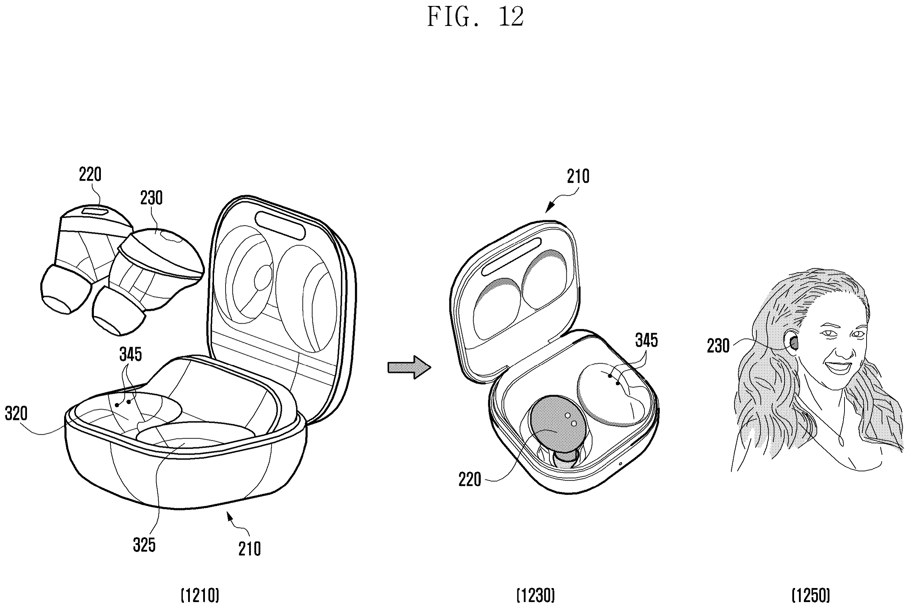

For example, the electronic device 210 may not include the short-range communication circuit 605 and the speaker 620. Various embodiments of a method of outputting an FM radio signal via the first wireless audio device 220 or the second wireless audio device 230 when the electronic device 210 does not include the short-range communication circuit 605 and the speaker 620 will be described below with reference to FIGS. 12 to 14B.

FIG. 12 illustrates a method of outputting an FM radio signal of the electronic device 210 according to an embodiment of the disclosure.

Referring to FIG. 12, as illustrated in reference numeral <1210>, the first wireless audio device 220 and the second wireless audio device 230 may be detached from the electronic device 210. For example, the first wireless audio device 220 and the second wireless audio device 230 may be detached from the electronic device 210 and worn in both ears of the user. For example, the first wireless audio device 220 and the second wireless audio device 230 may be worn in both ears of the user and output audio signals (e.g., audio signals according to an incoming call, a received message, an alarm, or audio playback) received from an external electronic device (e.g., an external electronic device 240 of FIG. 2). However, this is not limited thereto.

In an embodiment, while the first wireless audio device 220 and the second wireless audio device 230 are outputting an audio signal received from the external electronic device 240, the external electronic device 240 may detect an input for activating the FM radio receiving function. For example, the external electronic device 240 may execute an application related to the radio receiving function in response to a user input and may detect the input for activating the FM radio receiving function via the executed application related to the FM radio receiving function. Based on detection of the input for activating the FM radio receiving function, the external electronic device 240 may guide one of the first wireless audio device 220 and the second wireless audio device 230 into a seated state in the electronic device 210. For example, the external electronic device 240 may output seating-related guide information onto a display (e.g., the display module 160 of FIG. 1) such that one of the first wireless audio device 220 and the second wireless audio device 230 is seated in the electronic device 210. However, this is not limited thereto. The external electronic device 240 may transmit seating-related guide information to the wireless audio device (e.g., the first wireless audio device 220 and/or the second wireless audio device 230) such that one of the first wireless audio device 220 and the second wireless audio device 230, which are worn in the user's ears, is seated in the electronic device 210, thereby outputting the seating-related guide information via the speaker (e.g., the speaker 730 of FIG. 7) of the wireless audio device (e.g., the first wireless audio device 220 and/or the second wireless audio device 230).

In an embodiment, when at least one of the first wireless audio device 220 and the second wireless audio device 230 is seated in the electronic device 210, the electronic device 210 may transmit an FM radio signal received via the FM radio receiving circuit 610 to the wireless audio device seated in the electronic device 210. For example, the wireless audio device (e.g., the first wireless audio device 220 and the second wireless audio device 230) may include at least one terminal, and the electronic device 210 may also include at least one terminal (e.g., the at least one terminal 345 of FIG. 3). Based on that the wireless audio device (e.g., the first wireless audio device 220 and/or the second wireless audio device 230) is seated in a groove (e.g., the first groove 320 and/or the second groove 325 of FIG. 3) configured in the first housing structure 305 of the electronic device 210, the at least one terminal of the wireless audio device may come into physical contact with the at least one terminal 345 of the electronic device 210. Based on the physical contact between the at least one terminal of the wireless audio device and the at least one terminal 345 of the electronic device 210, a communication channel may be established between the electronic device 210 and the first wireless audio device 220 or the second wireless audio device 230. The communication channel may be implemented as a power line communication (PLC) channel.

In an embodiment, when the external electronic device 240 detects an input for activating an FM radio receiving function, the external electronic device 240 may notify the first wireless audio device 220 and/or the second wireless audio device 230 that the FM radio receiving function has been activated. When the first wireless audio device 220 and/or the second wireless audio device 230 are seated in the electronic device 210 based on seating-related guide information, the electronic device 210 may activate the FM radio receiving circuit 610 via power line communication (PLC).

As illustrated in reference numerals <1230> and <1250>, the description with reference to FIG. 12 according to an embodiment is provided under the assumption that among the first wireless audio device 220 and the second wireless audio device 230, the first wireless audio device 220 is seated in the electronic device 210, and the second wireless audio device 230 is worn in the user's right ear.

In an embodiment, based on that the first wireless audio device 220 is seated in the electronic device 210, the electronic device 210 may transmit an FM radio signal received via the FM radio receiving circuit 610 to the first wireless audio device 220 via a PLC circuit (e.g., the PLC circuit 643 of FIG. 6). The first wireless audio device 220 may transmit the FM radio signal received from the electronic device 210 to the paired second wireless audio device 230 via short-range communication (e.g., Bluetooth communication).

In an embodiment, the second wireless audio device 230 may output, via the speaker 730, the FM radio signal received from the paired first wireless audio device 220.

Not limited thereto, and although not shown, the electronic device 210 may detect an input for activating the FM radio receiving function while the first wireless audio device 220 and the second wireless audio device 230 are seated in the electronic device 210. The electronic device 210 may activate the FM radio receiving circuit 610 based on detection of the input for activating the FM radio receiving function. Based on the activation of the FM radio receiving circuit 610, the electronic device 210 may provide seating-related guide information such that one of the first wireless audio device 220 and the second wireless audio device 230 is seated in the electronic device 210. For example, the electronic device 210 may output the seating-related guide information via an indicator (e.g., the indicator 340 of FIG. 3) such that one of the first wireless audio device 220 and the second wireless audio device 230 is seated in the electronic device 210. However, this is not limited thereto. When one (e.g., the first wireless audio device 220 or the second wireless audio device 230) of the first wireless audio device 220 and the second wireless audio device 230, which are seated in the electronic device 210, is detected as being detached from the electronic device 210, the electronic device 210 may transmit an FM radio signal received via the activated FM radio receiving circuit 610 to the wireless audio device (e.g., the first wireless audio device 220 or the second wireless audio device 230) seated in the electronic device 210 via the PLC circuit 643. The wireless audio device (e.g., the first wireless audio device 220 or the second wireless audio device 230) seated in the electronic device 210 may transmit, via short-range communication (e.g., Bluetooth communication), the FM radio signal received from the electronic device 210 to the wireless audio device (e.g., the second wireless audio device 230 or the first wireless audio device 220) that is not seated in the electronic device 210.

In various embodiments, regardless of whether the electronic device 210 is in a closed state or an open state, a wireless audio device (e.g., the first wireless audio device 220 or the second wireless audio device 230) seated in the electronic device 210 may transmit, via a short-range communication circuit (e.g., the short-range communication circuit 705 of FIG. 7), an FM radio signal to a wireless audio device (e.g., the second wireless audio device 230 or the first wireless audio device 220) not seated in the electronic device 210. For example, when the FM radio receiving circuit 610 of the electronic device 210 is in an activated state, the short-range communication circuits (e.g., the short-range communication circuit 705 of FIG. 7) of the wireless audio devices (e.g., the first wireless audio device 220 and the second wireless audio device 230) may remain in an activated state regardless of whether the electronic device 210 is in a closed or open state. In an embodiment, when the FM radio receiving circuit 610 is deactivated and the electronic device 210 is in a closed state, the short-range communication circuit 705 of the wireless audio device (e.g., the first wireless audio device 220 or the second wireless audio device 230) seated in the electronic device 210 may transition to a deactivated state.

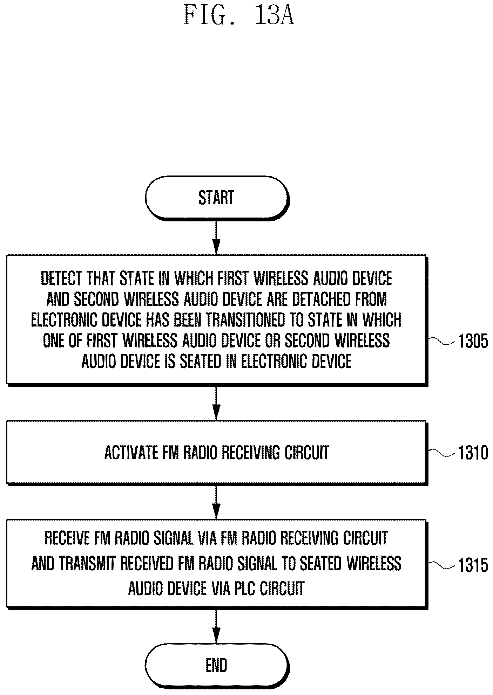

FIG. 13A is a flowchart illustrating a method of outputting an FM radio signal of the electronic device 210 according to an embodiment of the disclosure.

In the following embodiments, respective operations may be performed sequentially, but are not necessarily performed sequentially. For example, the order of the operations may be changed, and at least two operations may be performed in parallel.

According to an embodiment, operations 1305 to 1315 may be understood to be performed by a processor (e.g., the processor 645 of FIG. 6) of an electronic device (e.g., the electronic device 210 of FIG. 6).

In an embodiment, in operation 1305, the processor 645 may detect that a state in which the first wireless audio device (e.g., the first wireless audio device 220 of FIG. 2) and the second wireless audio device (e.g., the second wireless audio device 230 of FIG. 2) are detached from the electronic device 210 has been transitioned to a state in which one of the first wireless audio device 220 and the second wireless audio device 230 is seated in the electronic device 210.

For example, the first wireless audio device 220 and the second wireless audio device 230 may be detached from the electronic device 210 and worn in the user's ears. For example, the external electronic device 240 may receive sensor information (e.g., sensor information obtained using a proximity sensor, based on an electromagnetic field or electromagnetic wave (e.g., infrared rays) which is emitted and then returned, sensor information obtained using a grip sensor, based on a change in capacitance or dielectric constant, and/or sensor information related to the movement of the wireless audio device) from each of the first wireless audio device 220 and the second wireless audio device 230. Based on the received sensor information, the external electronic device 240 may identify whether the first wireless audio device 220 and the second wireless audio device 230 are worn in the user's ears.

In an embodiment, the first wireless audio device 220 and the second wireless audio device 230 may be paired with an external electronic device (e.g., the external electronic device 240 of FIG. 2) to output audio signals (e.g., audio signals according to an incoming call, a received message, an alarm, or audio playback) received from the external electronic device 240 while the first wireless audio device 220 and the second wireless audio device 230 are worn in the user's ears after detached from the electronic device 210. However, this is not limited thereto.

In an embodiment, the external electronic device 240 may identify whether an input for activating an FM radio receiving function is detected. For example, the external electronic device 240 may execute an application related to the FM radio receiving function in response to a user input and may detect the input for activating the FM radio receiving function via the executed application related to the FM radio receiving function. In this case, the external electronic device 240 may provide seating-related guide information for guiding one (e.g., the first wireless audio device 220 or the second wireless audio device 230) of the first wireless audio device 220 and the second wireless audio device 230 into a seated state in the electronic device 210 such that the FM radio signal received from the FM radio receiving circuit (e.g., the FM radio receiving circuit 610 of FIG. 6) provided in the electronic device 210 is output via the wireless audio device (e.g., the first wireless audio device 220 or the second wireless audio device 230). The seating-related guide information according to an embodiment may include visual information and/or audio information. For example, the external electronic device 240 may output, onto a display (e.g., the display module 160 of FIG. 1), visual information for guiding one of the wireless audio devices into a stated state in the electronic device 210. As another example, the external electronic device 240 may transmit seating-related guide information to wireless audio devices (e.g., the first wireless audio device 220 and the second wireless audio device 230) worn in the user's ears. The wireless audio devices (e.g., the first wireless audio device 220 and the second wireless audio device 230) worn in the user's ears may output, via a speaker (e.g., the speaker 730 of FIG. 7), audio information for guiding one of the wireless audio devices into a seated state in the electronic device 210. However, this is not limited thereto.

In an embodiment, the processor 645 may identify whether at least one terminal included in the first wireless audio device 220 and/or the second wireless audio device 230 is in physical contact with at least one terminal (e.g., at least one terminal 345 of FIG. 3) configured in a first groove (e.g., the first groove 320 of FIG. 3) and a second groove (e.g., the second groove 325 of FIG. 3) of the first housing structure (e.g., the first housing structure 305 of FIG. 3) of the electronic device 210, thereby identify whether the first wireless audio device 220 and/or the second wireless audio device 230 are seated in the electronic device 210.

In an embodiment, when one of the first wireless audio device 220 and the second wireless audio device 230 is detected as being seated in the electronic device 210, the processor 645 may activate the FM radio receiving circuit 610 in operation 1310. In an embodiment, when an input for activating the FM radio receiving function is detected, the external electronic device 240 may notify the first wireless audio device 220 and/or the second wireless audio device 230 that the FM radio receiving function has been activated. When the first wireless audio device 220 and/or the second wireless audio device 230 are seated in the electronic device 210 based on seating-related guide information, the electronic device 210 may activate the FM radio receiving circuit 610 via power line communication (PLC).

In an embodiment, in operation 1315, the processor 645 may receive an FM radio signal via the FM radio receiving circuit 610 and transmit the received FM radio signal to a seated wireless audio device via a PLC circuit (e.g., the PLC circuit 643 of FIG. 6).

Although not illustrated, the wireless audio device (e.g., the first wireless audio device 220 or the second wireless audio device 230) seated in the electronic device 210 may transmit the FM radio signal received from the electronic device 210 to a wireless audio device (e.g., the second wireless audio device 230 or the first wireless audio device 220) worn in the user's ear via a short-range communication circuit (e.g., the short-range communication circuit 705 of FIG. 7). The wireless audio device (e.g., the second wireless audio device 230 or the first wireless audio device 220) worn in the user's ear may output the FM radio signal received from the wireless audio device (e.g., the first wireless audio device 220 or the second wireless audio device 230) seated in the electronic device 210.

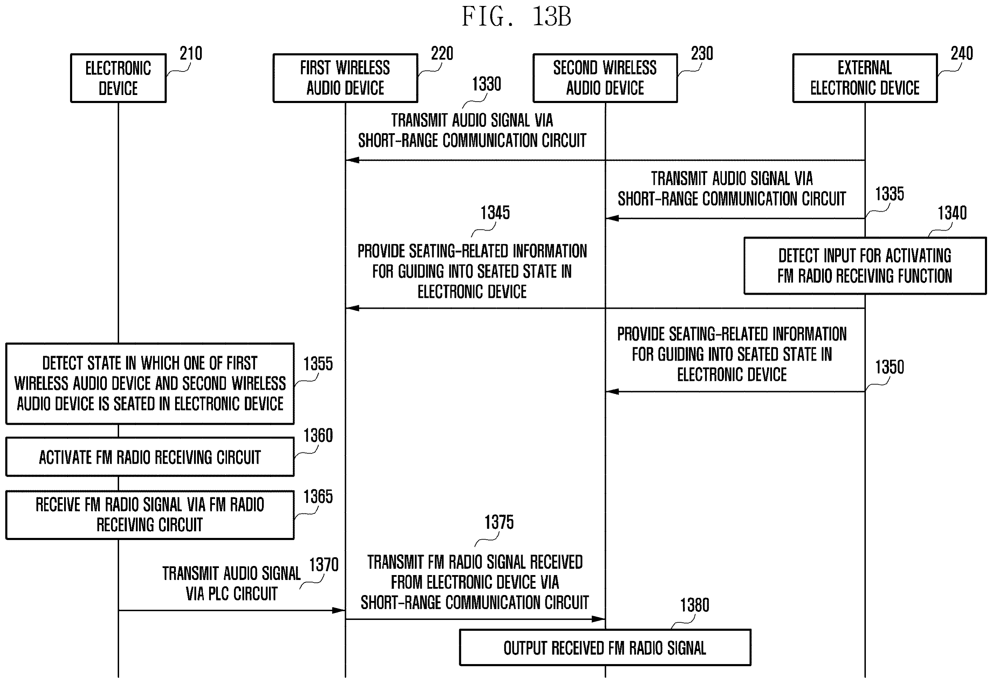

FIG. 13B illustrates a signal flow among the electronic device 210, the first wireless audio device 220, the second wireless audio device 230, and the external electronic device 240 according to an embodiment of the disclosure.

In the following embodiments, respective operations may be performed sequentially, but are not necessarily performed in that order. For example, the order of the operations may be changed, and at least two operations may be performed in parallel.

According to an embodiment, operations 1330 to 1350 may be understood to be performed by a processor (e.g., the processor 120 of FIG. 1) of an external electronic device (e.g., the external electronic device 240 of FIG. 2). Operations 1355 to 1370 may be understood to be performed by a processor (e.g., the processor 645 of FIG. 6) of the electronic device (e.g., the electronic device 210 of FIG. 2). Operation 1375 may be understood to be performed by a processor (e.g., the processor 745 of FIG. 7) of the first wireless audio device (e.g., the first wireless audio device 220 of FIG. 2), and operation 1380 may be understood to be performed by the processor 745 of the second wireless audio device (e.g., the second wireless audio device 230 of FIG. 2).

Operations 1355 to 1370 of FIG. 13B according to various embodiments are substantially the same as operations 1305 to 1315 of FIG. 13A described above, and thus a detailed description thereof may be replaced with the description of FIG. 13A.

Referring to FIG. 13B, the first wireless audio device 220 and the second wireless audio device 230 may be detached from the user's electronic device 210, worn in the user's ears, and paired with the external electronic device 240.

In an embodiment, in operation 1330, the external electronic device 240 may transmit an audio signal (e.g., an audio signal according to an incoming call, a message reception, an alarm, or audio playback) to the first wireless audio device 220 via a short-range communication circuit (e.g., the wireless communication circuit 192 of FIG. 1). In operation 1335, the external electronic device 240 may transmit the audio signal to the second wireless audio device 230 via the short-range communication circuit 192. Although not shown, each of the first wireless audio device 220 and the second wireless audio device 230 may output, via a speaker (e.g., a speaker 730 of FIG. 7), the audio signal received from the external electronic device 240.

In an embodiment, at operation 1340, the external electronic device 240 may detect an input for activating the FM radio receiving function. For example, the external electronic device 240 may execute an application related to the FM radio receiving function and detect the input for activating the FM radio receiving function via the executed application related to the FM radio receiving function.

In an embodiment, in operation 1345, the external electronic device 240 may transmit seating-related information to the first wireless audio device 220 via the short-range communication circuit 192, the seating-related information guiding the first wireless audio device 220 into a seated state in the electronic device 210. In operation 1350, the external electronic device 240 may transmit seating-related information to the second wireless audio device 230 via the short-range communication circuit 192, the seating-related information guiding the second wireless audio device 230 into a seated state in the electronic device 210.

For example, the external electronic device 240 may provide seating-related information for guiding seating of one (e.g., the first wireless audio device 220 or the second wireless audio device 230) of the first wireless audio device 220 and the second wireless audio device 230 in the electronic device 210 such that an FM radio signal received from an FM radio receiving circuit (e.g., an FM radio receiving circuit 610 of FIG. 6) provided in the electronic device 210 is output through the wireless audio device (e.g., the first wireless audio device 220 or the second wireless audio device 230). The seating-related information according to an embodiment may include visual information and/or audio information.

In an embodiment, in operation 1355, the electronic device 210 may detect that one of the first wireless audio device 220 and the second wireless audio device 230 is seated in the electronic device 210. Based on detection that one of the first wireless audio device 220 and the second wireless audio device 230 is stably seated in the electronic device 210, the electronic device 210 may activate the FM radio receiving circuit 610 in operation 1360. In an embodiment, the first wireless audio device 220 and the second wireless audio device 230 may cause the electronic device 210 to activate the FM radio receiving circuit 610 via power line communication (PLC) when the first wireless audio device 220 and the second wireless audio device 230 are seated in the electronic device 210 based on the seating-related guide information.

In an embodiment, the electronic device 210 may receive an FM radio signal via the FM radio receiving circuit 610 in operation 1365.

The description with reference to FIG. 13B according to various embodiments is provided under the assumption that a wireless audio device seated in the electronic device 210 is the first wireless audio device 220.

In an embodiment, the electronic device 210 may transmit the FM radio signal received via the FM radio receiving circuit 610 to the first wireless audio device 220 via a PLC circuit (e.g., the PLC circuit 643 of FIG. 6) in operation 1370.

In an embodiment, the first wireless audio device 220 may transmit the FM radio signal received from the electronic device 210 to the second wireless audio device 230 via a short-range communication circuit (e.g., the short-range communication circuit 705 of FIG. 7) in operation 1375. In operation 1380, the second wireless audio device 230 may output, via a speaker (e.g., the speaker 730 of FIG. 7), the FM radio signal received from the first wireless audio device 220.

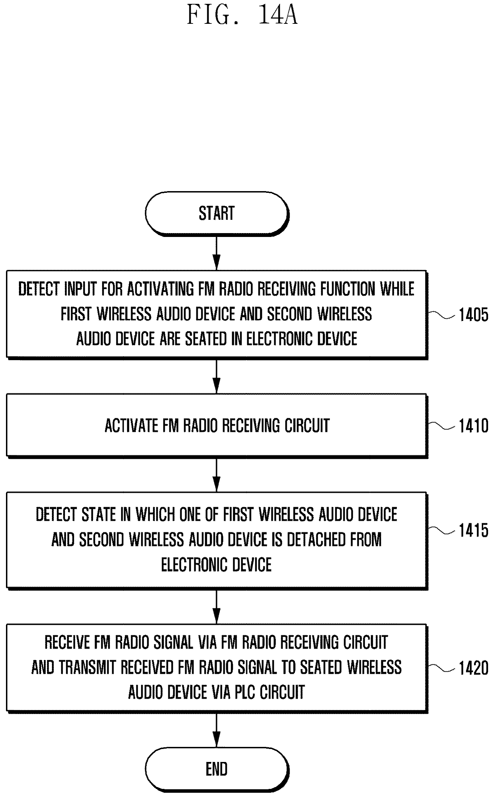

FIG. 14A is a flowchart illustrating a method of outputting an FM radio signal of the electronic device 210 according to an embodiment of the disclosure.

In the following embodiments, respective operations may be performed sequentially, but are not necessarily performed sequentially. For example, the order of the operations may be changed, and at least two operations may be performed in parallel.

According to an embodiment, operations 1405 to 1420 may be understood to be performed by a processor (e.g., the processor 645 of FIG. 6) of an electronic device (e.g., the electronic device 210 of FIG. 6).

In an embodiment, the processor 645 may detect an input for activating an FM radio receiving function in operation 1405 while a first wireless audio device (e.g., the first wireless audio device 220 of FIG. 2) and a second wireless audio device (e.g., the second wireless audio device 230 of FIG. 2) are seated in the electronic device 210. For example, an input for activating the FM radio receiving function may include an operation of a physical button (e.g., a key button) provided on a housing structure (e.g., the first housing structure 305 and/or the second housing structure 310 of FIG. 3) of the electronic device 210, a touch input detected via a touch sensor provided on the housing structures 305 and/or 310, a voice input related to activation of an FM radio receiving function, and a wireless signal related to activation of an FM radio receiving function (e.g., a signal related to an operation detected via an input circuit (e.g., an input circuit 720 of FIG. 7) separately provided in a wireless audio device.

In an embodiment, based on detection of an input for activating the FM radio receiving function, the processor 645 may activate an FM radio receiving circuit (e.g., the FM radio receiving circuit 610 of FIG. 6) in operation 1410.

In an embodiment, after activating the FM radio receiving circuit 610, the processor 645 may, in operation 1415, detect that one of the first wireless audio device 220 and the second wireless audio device 230 is detached from the electronic device 210. For example, the processor 645 may identify whether at least one terminal included in the first wireless audio device 220 and/or the second wireless audio device 230 is in physical contact with at least one terminal configured in a first groove (e.g., the first groove 320 of FIG. 3) and a second groove (e.g., the second groove 325 of FIG. 3) of the first housing structure (e.g., the first housing structure 305 of FIG. 3) of the electronic device 210, thereby identify whether one of the first wireless audio device 220 and the second wireless audio device 230 is detached from the electronic device 210.

In an embodiment, when one of the first wireless audio device 220 and the second wireless audio device is detected as being detached from the electronic device 210, the processor 645 may, in operation 1420, receive an FM radio signal via the FM radio receiving circuit 610 and transmit the received FM radio signal to the seated wireless audio device (e.g., the first wireless audio device 220 or the second wireless audio device 230) via a PLC circuit (e.g., the PLC circuit 643 of FIG. 6). For example, in order to output the FM radio signal via the wireless audio device (e.g., the second wireless audio device 230 or the first wireless audio device 220) detached from the electronic device 210, the FM radio signal being received from the activated FM radio receiving circuit 610, the processor 645 may transmit the FM radio signal via the wireless audio device (e.g., the first wireless audio device 220 or the second wireless audio device 230) seated in the electronic device 210 to the other wireless audio device (e.g., the second wireless audio device 230 or the first wireless audio device 220) paired with the wireless audio device (e.g., the first wireless audio device 220 or the second wireless audio device 230), thereby outputting the FM radio signal via the other wireless audio device (e.g., the second wireless audio device 230 or the first wireless audio device 220).

In an embodiment, although not shown, after activating the FM radio receiving circuit 610, the processor 645 may perform an operation of identifying for a designated time whether one of the first wireless audio device 220 and the second wireless audio device 230 is detached from the electronic device 210. When neither the first wireless audio device 220 nor the second wireless audio device 230 is identified as being detached from the electronic device 210 for the designated time, the processor 645 may perform control such that the activated FM radio receiving circuit 610 is in a deactivated state.

In an embodiment, the electronic device 210 may also detect an input for activating the FM radio receiving function while one of the first wireless audio device 220 or the second wireless audio device 230 is seated in the electronic device 210. The electronic device 210 may activate the FM radio receiving circuit 610, receive an FM radio signal via the FM radio receiving circuit 610, and transmit the received FM radio signal to a seated wireless audio device (e.g., the first wireless audio device 220 or the second wireless audio device 230) via a PLC circuit (e.g., the PLC circuit 643 of FIG. 6).

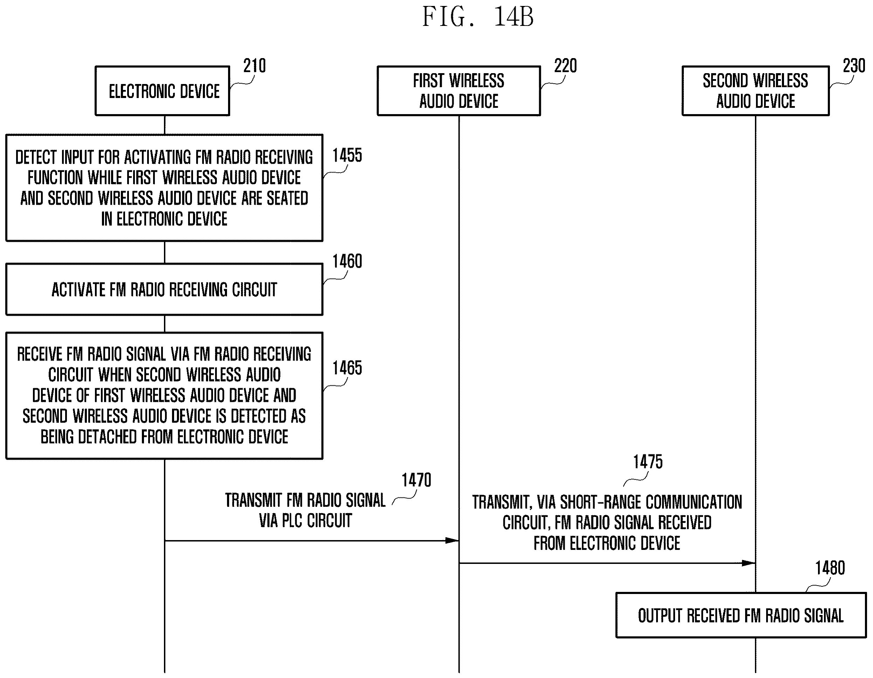

FIG. 14B illustrates a signal flow among the electronic device 210, the first wireless audio device 220, and the second wireless audio device 230 according to an embodiment of the disclosure.

In the following embodiments, respective operations may be performed sequentially, but are not necessarily performed sequentially. For example, the order of each operation may be changed, and at least two operations may be performed in parallel.

According to an embodiment, operations 1455 to 1470 may be understood to be performed by a processor (e.g., the processor 645 of FIG. 6) of an electronic device (e.g., the electronic device 210 of FIG. 2). Operation 1475 may be understood to be performed by a processor (e.g., the processor 745 of FIG. 7) of a first wireless audio device (e.g., the first wireless audio device 220 of FIG. 2). Operation 1480 may be understood to be performed by the processor 745 of a second wireless audio device (e.g., the second wireless audio device 230 of FIG. 2).

Operations 1455 to 1470 of FIG. 14B according to various embodiments are substantially the same as operations 1405 to 1420 of FIG. 14A described above, and therefore, a detailed description thereof may be replaced with the description of FIG. 14A.

Referring to FIG. 14B, in operation 1455, the electronic device 210 may detect an input for activating the FM radio receiving function while the first wireless audio device 220 and/or the second wireless audio device 230 is seated in the electronic device 210. Based on detection of the input for activating the FM radio receiving function, the electronic device 210 may activate the FM radio receiving circuit (e.g., the FM radio receiving circuit 610 of FIG. 6) in operation 1460.

The description with reference to FIG. 14B according to an embodiment is provided under the assumption that the second wireless audio device 230 of the first wireless audio device 220 and the second wireless audio device 230 is detached from the electronic device 210.

In an embodiment, in operation 1465, the electronic device 210 may receive an FM radio signal via the FM radio receiving circuit 610 when the second wireless audio device 230 of the first wireless audio device 220 and the second wireless audio device 230 is detected as being detached from the electronic device 210.

In an embodiment, in operation 1470, the electronic device 210 may transmit an FM radio signal to the first wireless audio device 220 (e.g., the first wireless audio device 220 seated in the electronic device 210) via a PLC circuit (e.g., the PLC circuit 643 of FIG. 6).

In an embodiment, in operation 1475, the first wireless audio device 220 may transmit the FM radio signal received from the electronic device 210 to the second wireless audio device 230 via a short-range communication circuit (e.g., the short-range communication circuit 705 of FIG. 7). In operation 1480, the second wireless audio device 230 may output the FM radio signal received from the first wireless audio device 220.

Although not illustrated in various embodiments, one wireless audio device (e.g., the first wireless audio device 220 or the second wireless audio device 230) may be seated in the electronic device 210 while outputting, via the other wireless audio device (e.g., the second wireless audio device 230 or the first wireless audio device 220), an audio signal received from the external electronic device 240. In addition, the electronic device 210 may be in a closed state, and accordingly, the short-range communication circuit 705 of the wireless audio device (e.g., the first wireless audio device 220 or the second wireless audio device 230) seated in the electronic device 210 may be in a deactivated state. In this case, when an input for activating the FM radio receiving function is detected, the electronic device 210 may activate the FM radio receiving circuit 610 and perform control such that the short-range communication circuit 705 of the wireless audio device (e.g., the first wireless audio device 220 or the second wireless audio device 230) seated in the electronic device 210 is in an activated state. For example, the electronic device 210 may activate the short-range communication circuit 705 of the wireless audio device (e.g., the first wireless audio device 220 or the second wireless audio device 230) seated in the electronic device 210 by transmitting a signal related to the activation of the short-range communication circuit 705 via the PLC circuit 643. In an embodiment, the electronic device 210 may transmit, via the PLC circuit 643, the FM radio signal received via the FM radio receiving circuit 610 to the wireless audio device (e.g., the first wireless audio device 220 or the second wireless audio device 230) seated in the electronic device 210. The wireless audio device (e.g., the first wireless audio device 220 or the second wireless audio device 230) seated in the electronic device 210 may cause the wireless audio device (e.g., the second wireless audio device 230 or the first wireless audio device 220) detached from the electronic device 210 to output the FM radio signal, by transmitting, via the short-range communication circuit 705, the FM radio signal to the wireless audio device (e.g., the second wireless audio device 230 or the first wireless audio device 220) detached from the electronic device 210.

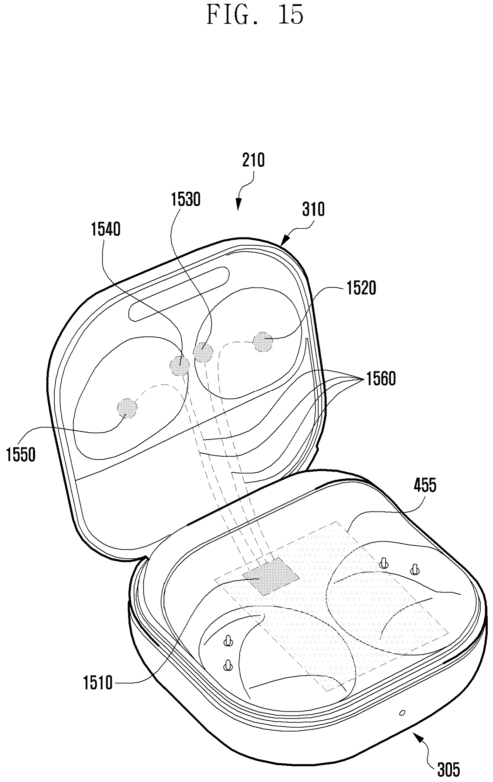

FIG. 15 illustrates the input circuit 630 of the electronic device 210 according to an embodiment of the disclosure.

Referring to FIG. 15, an input circuit (e.g., the input circuit 630 of FIG. 6) of the electronic device 210 may include at least one electrode configured to perform a function associated with an FM radio signal received via an FM radio receiving circuit (e.g., the FM radio receiving circuit 610 of FIG. 6). For example, the function associated with an FM radio signal may include a function for configuring the strength (e.g., volume up/down) of an FM radio signal output by a wireless audio device (e.g., the first wireless audio device 220 and/or the second wireless audio device 230 of FIG. 2), a function for configuring an FM radio broadcast channel (e.g., channel search, channel change), and/or a function for activating or deactivating an FM radio receiving function. However, this is not limited thereto.

In an embodiment, at least one electrode may be disposed in at least a partial area of one surface of the second housing structure 310 of the electronic device 210. The at least one electrode may be provided as at least one button for detecting an input for performing a function related to an FM radio signal. For example, the at least one button may be implemented as a physical button (e.g., a key button having a mechanical switch), a touch sensor (e.g., capacitive or piezoelectric), or a pressure sensor. However, this is not limited thereto.

In an embodiment, at least one electrode may include a first electrode 1520, a second electrode 1530, a third electrode 1540, and/or a fourth electrode 1550.

In an embodiment, a printed circuit board 455 may be disposed in the inner space of the first housing structure 305 of the electronic device 210. A touch circuit 1510 may be disposed (or included) on the printed circuit board 455.

In an embodiment, the at least one electrode (e.g., the first electrode 1520, the second electrode 1530, the third electrode 1540, and/or the fourth electrode 1550) may be electrically connected via a flexible printed circuit board (FPCB) 1560 to the touch circuit 1510 disposed on the printed circuit board 455.

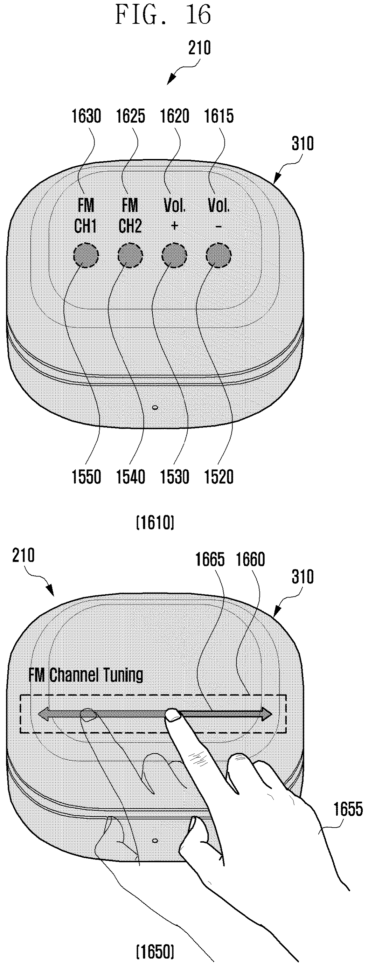

In an embodiment, at least one electrode (e.g., the first electrode 1520, the second electrode 1530, the third electrode 1540, and/or the fourth electrode 1550) may be mapped to a function related to the FM radio signal. In this regard, various embodiments will be described in detail with reference to FIG. 16 below.

In an embodiment, when the at least one electrode (e.g., the first electrode 1520, the second electrode 1530, the third electrode 1540, and/or the fourth electrode 1550) is electrically connected via the flexible printed circuit board (FPCB) 1560 to the touch circuit 1510 disposed on the printed circuit board 455, the electronic device 210 may detect, via the touch circuit 1510, a capacitance change exceeding a designated value at the at least one electrode (e.g., the first electrode 1520, the second electrode 1530, the third electrode 1540, and/or the fourth electrode 1550). For example, the electronic device 210 may detect a change in capacitance exceeding a designated value via the touch circuit 1510 based on a conductive member (e.g., a finger) being in contact with at least one electrode (e.g., the first electrode 1520, the second electrode 1530, the third electrode 1540, and/or the fourth electrode 1550). The electronic device 210 may perform a function related to an FM radio signal, which is mapped to at least one electrode (e.g., the first electrode 1520, the second electrode 1530, the third electrode 1540, and/or the fourth electrode 1550) in which the capacitance change exceeding the designated value has been detected.

FIG. 15 according to various embodiments illustrates that four electrodes are provided in the second housing structure 310, but this is only one embodiment and is not limited thereto.

FIG. 16 illustrates an operation of the input circuit 630 of the electronic device 210 according to an embodiment of the disclosure.

Referring to FIG. 16, as described with reference to FIG. 15, the second housing structure 310 of the electronic device 210 may be provided with the first electrode 1520, the second electrode 1530, the third electrode 1540, and/or the fourth electrode 1550 for performing a function related to an FM radio signal. Each of the first electrode 1520, the second electrode 1530, the third electrode 1540, and the fourth electrode 1550 may be implemented as a capacitive touch sensor. However, this is not limited thereto.

In an embodiment, at least one electrode (e.g., the first electrode 1520, the second electrode 1530, the third electrode 1540, and/or the fourth electrode 1550) may be mapped to a function related to the FM radio signal, described above. For example, as shown by reference number 1610, the first electrode 1520 and the second electrode 1530 may be mapped to a function for configuring the strength of an FM radio signal output by the wireless audio device (e.g., the first wireless audio device 220 and/or the second wireless audio device 230), such as a volume down function 1615 and a volume up function 1620. The third electrode 1540 and the fourth electrode 1550 may be mapped to a function for configuring an FM radio broadcast channel, for example, a second channel 1625 and a first channel 1630 of an FM radio broadcast. However, this is not limited thereto.

In an embodiment, the processor (e.g., the processor 645 of FIG. 6) of the electronic device 210 may detect a capacitance change at each electrode (e.g., the first electrode 1520, the second electrode 1530, the third electrode 1540, and/or the fourth electrode 1550) via a touch circuit (e.g., the touch circuit 1510 of FIG. 15). For example, based on that a conductive member 1655 (e.g., a finger) is in contact with at least one electrode (e.g., the first electrode 1520, the second electrode 1530, the third electrode 1540, and/or the fourth electrode 1550), the electronic device 210 may detect a capacitance change via the touch circuit 1510. The electronic device 210 may perform a function related to the FM radio signal, which is mapped to at least one electrode (e.g., the first electrode 1520, the second electrode 1530, the third electrode 1540, and/or the fourth electrode 1550) int which the capacitance change has been detected.

The disclosure is not limited thereto. As shown by reference number 1650, based on that a gesture by a conductive member 1655 (e.g., a finger) is detected on a touch area 1660 configured on one surface of the second housing structure 310 of the electronic device 210, the electronic device 210 may perform a function related to the FM radio signal corresponding to the detected gesture. In an embodiment, a function related to an FM radio signal, which is mapped according to a gesture may be different. For example, the description is provided under the assumption that the function mapped to a first gesture 1665 (e.g., a swipe gesture) is a function for searching FM radio channels, and the function mapped to a second gesture (e.g., a long press and drag gesture) is a volume control function. For example, when the gesture 1665 (e.g., a swipe gesture) by the conductive member 1655 (e.g., a finger) is detected in the touch area 1660 configured on one surface of the second housing structure 310 of the electronic device 210, the electronic device 210 may perform the function for searching FM radio channels. For another example, when the second gesture (e.g., a long press and drag gesture) is detected in the touch area 1660 configured on one surface of the second housing structure 310 of the electronic device 210, the electronic device 210 may perform the volume control function.

The disclosure is not limited thereto, and a function related to the FM radio signal corresponding to a voice command may also be performed based on the voice command received via a microphone (e.g., the microphone 735 of FIG. 7) provided in each of the first wireless audio device 220 and the second wireless audio device 230.

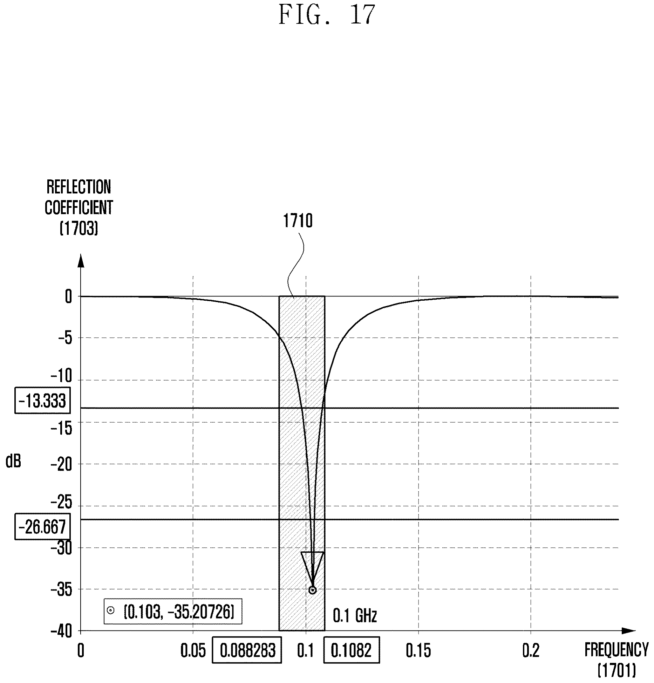

FIG. 17 illustrates a graph of an operation result of the FM radio receiving circuit 610 of the electronic device 210 according to an embodiment of the disclosure.

In the graph shown in FIG. 17 according to various embodiments, the x-axis may represent frequency (MHz) 1701, and the y-axis may represent reflection coefficient (dBm) 1703.

In an embodiment, the electronic device (e.g., the electronic device 210 of FIG. 2) may include an FM radio receiving circuit (e.g., the FM radio receiving circuit 610 of FIG. 6) to receive FM radio broadcasting (e.g., frequency modulation (FM) radio broadcasting using signals in the frequency band of 87.5 MHz to 108.0 MHz).

According to the embodiments of FIGS. 3 to 16 described above, the electronic device 210 may activate the FM radio receiving circuit 610 based on detection of an input for activating the FM radio receiving function, and receive an FM radio signal via the activated FM radio receiving circuit 610. The electronic device 210 may transmit the received FM radio signal to a wireless audio device (e.g., the first wireless audio device 220 and/or the second wireless audio device 230 of FIG. 2), thereby outputting an audio signal via a speaker (e.g., the speaker 730 of FIG. 7) of the wireless audio device (e.g., the first wireless audio device 220 and/or the second wireless audio device 230 of FIG. 2).

According to the embodiments described above, the FM radio signal received via the FM radio receiving circuit 610 may have a reflection coefficient of about -10 dBm or lower in a frequency band (e.g., about 0.1 GHz) 1710, as illustrated in FIG. 17. As noted from the reflection coefficient, which is approximately -10 dBm or lower, resonance is well configured, and the performance as an antenna for receiving an FM radio signal is satisfactory.

According to an embodiment of the disclosure, a method of outputting an FM radio signal of an electronic device 210 for seating a wireless audio device 220, 230 may include detecting an input for activating an FM radio receiving function while at least one of the first wireless audio device 220 and the second wireless audio device 230 is worn in a user's ear. According to an embodiment, a method of outputting an FM radio signal of an electronic device 210 for seating the wireless audio device 220, 230 may include activating an FM radio receiving circuit 610 based on detection of the input for activating the FM radio receiving function. According to an embodiment, a method of outputting an FM radio signal of the electronic device 210 for seating the wireless audio device 220, 230 may include receiving an FM radio signal via the activated FM radio receiving circuit 610. According to an embodiment, a method of outputting an FM radio signal of the electronic device 210 for seating the wireless audio device 220, 230 may include transmitting the FM radio signal received via the FM radio receiving circuit 610 to at least one of the first wireless audio device 220 and the second wireless audio device 230 via a short-range communication circuit 605.

In an embodiment, the input for activating the FM radio receiving function may include an operation of a physical button provided in the first housing structure 305 and/or the second housing structure 310 of the electronic device 210. In an embodiment, the input for activating the FM radio receiving function may include a touch input detected via a touch sensor provided in the first housing structure 305 and/or the second housing structure 310. In an embodiment, the input for activating the FM radio receiving function may include a voice input related to activation of the FM radio receiving function. In an embodiment, the input for activating the FM radio receiving function may include a wireless signal related to activation of the FM radio receiving function.

According to an embodiment, a method of outputting an FM radio signal of the electronic device 210 for seating the wireless audio device 220, 230 may further include performing, based on reception of a signal related to control of the FM radio signal, a function corresponding to the signal related to control of the FM radio signal.

In an embodiment, the signal related to control of the FM radio signal may include a signal related to configuration of the strength of the FM radio signal output by the first wireless audio device 220 and/or the second wireless audio device 230. In an embodiment, the signal related to control of the FM radio signal may include a signal related to configuration of an FM radio broadcast channel. In an embodiment, the signal related to control of the FM radio signal may include a signal related to activation or deactivation of the FM radio receiving function.

According to an embodiment, a method of outputting an FM radio signal from the electronic device 210 for seating the wireless audio device 220, 230 may further include transferring the FM radio signal received through the FM radio receiving circuit 610 to a speaker 330, 620 via an interface 640, thereby outputting the FM radio signal via the speaker 330, 620.

In an embodiment, the transmitting of the FM radio signal to at least one of the first wireless audio device 220 and the second wireless audio device 230 may include transmitting the FM radio signal to at least one of the first wireless audio device 220 and the second wireless audio device 230 via a short-range communication circuit 605 when an input for outputting the FM radio signal via at least one of the first wireless audio device 220 and the second wireless audio device 230 is detected while the FM radio signal is output via the speaker 330, 620.

In an embodiment, the electronic device 210 may further include a touch circuit 1510 and at least one electrode 1520, 1530, 1540, 1550 electrically connected to the touch circuit 1510.

According to an embodiment, a method of outputting an FM radio signal of the electronic device 210 for seating the wireless audio device 220, 230 may further include detecting a capacitance change exceeding a designated value at the at least electrode 1520, 1530, 1540, 1550 via the touch circuit 1510. According to an embodiment, the method of outputting an FM radio signal of the electronic device 210 for seating the wireless audio device 220, 230 may further include performing a function related to the FM radio signal, which is mapped to the at least one electrode in which the capacitance change exceeding the designated value has been detected.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (210) for seating a wireless audio device (220, 230), the electronic device (210) comprising:
a first housing structure (305);
a second housing structure (310) rotatably coupled to the first housing structure (305) by using a hinge structure (420);
a wireless charging coil antenna (515) disposed in an inner space of the first housing structure (305) and wound in a circular shape;
a shielding sheet (520) disposed on the wireless charging coil antenna (515);
a printed circuit board (455) disposed on the shielding sheet (520); and
an FM radio receiving coil antenna (460) disposed in at least a partial area of the printed circuit board (455).

2. The electronic device of claim 1, wherein the shielding sheet (520) is configured to block a signal transmitted or received via the wireless charging coil antenna (515) from affecting the FM radio receiving coil antenna (460) and transmit a signal transmitted from the wireless charging coil antenna (515) toward the outside of the electronic device (210), and
wherein the shielding sheet (520) comprises a protective film and/or a graphite sheet.

3. The electronic device of claim 1 or 2, further comprising a speaker (330, 620) configured to be capable of outputting an FM radio signal received via the FM radio receiving coil antenna (460).

4. The electronic device of any of claims 1 to 3, further comprising a feeding unit (465) disposed on at least a portion of the printed circuit board (455),
wherein the FM radio receiving coil antenna (460) is configured to receive FM radio signals corresponding to various FM radio channels by adjusting a resonant frequency of the FM radio receiving coil antenna (460), based on the FM radio receiving coil antenna (460) being electrically fed by the feeding unit (465).

5. The electronic device of any of claims 1 to 4, further comprising at least one electrode (1520, 1530, 1540, 1550) arranged in at least a partial area of one surface of the second housing structure (310).

6. The electronic device of any of claims 1 to 5, further comprising a touch circuit (1510) disposed on the printed circuit board (455),
wherein each of the at least one electrode (1520, 1530, 1540, 1550) is electrically connected to the touch circuit (1510) via a flexible printed circuit board (FPCB) (1560).

7. An electronic device (210) for seating a wireless audio device (220, 230), the electronic device (210) comprising:
a short-range communication circuit (605);
an FM radio receiving circuit (610);
memory (615) storing instructions; and
a processor (645),
wherein the instructions, when executed by the processor (645), cause the electronic device (210) to:
detect an input for activating an FM radio receiving function in a state where at least one of a first wireless audio device (220) or a second wireless audio device (230) is worn in a user's ear;
activate the FM radio receiving circuit (610), based on detection of the input for activating the FM radio receiving function;
receive an FM radio signal via the activated FM radio receiving circuit (610); and
transmit the received FM radio signal to at least one of the first wireless audio device (220) or the second wireless audio device (230) via the short-range communication circuit (605).

8. The electronic device of claim 7, wherein the input for activating the FM radio receiving function comprises at least one of an operation of a physical button provided in a first housing structure (305) and/or a second housing structure (310) of the electronic device (210), a touch input detected via a touch sensor provided in the first housing structure (305) and/or the second housing structure (310), a voice input related to activation of the FM radio receiving function, or a wireless signal related to activation of the FM radio receiving function.

9. The electronic device of claim 7 or 8, wherein the instructions, when executed by the processor (645), cause the electronic device (210) to, based on reception of a signal related to control of the FM radio signal, perform a function corresponding to the signal related to control of the FM radio signal, and
wherein the signal related to control of the FM radio signal comprises at least one of a signal related to configuration of magnitude of the FM radio signal output by the first wireless audio device (220) and/or the second wireless audio device (230), a signal related to configuration of an FM radio broadcast channel, or a signal related to activation or deactivation of the FM radio receiving function.

10. The electronic device of any of claims 7 to 9, further comprising a speaker (330, 620) and an interface (640),
wherein the instructions, when executed by the processor (645), cause the electronic device (210) to:
transfer the received FM radio signal to the speaker (330, 620) via the interface (640), thereby outputting the FM radio signal via the speaker (330, 620); and
in case that an input for outputting the FM radio signal via at least one of the first wireless audio device (220) or the second wireless audio device (230) is detected while the FM radio signal is output via the speaker (330, 620), transmit the FM radio signal to at least one of the first wireless audio device (220) or the second wireless audio device (230) via the short-range communication circuit (605).

11. The electronic device of any of claims 7 to 10, further comprising a touch circuit (1510) and at least one electrode (1520, 1530, 1540, 1550) electrically connected to the touch circuit (1510),
wherein the instructions, when executed by the processor (645), cause the electronic device (210) to:
detect a capacitance change exceeding a designated threshold from the at least one electrode (1520, 1530, 1540, 1550) via the touch circuit (1510); and
perform a function related to the FM radio signal, the function being mapped to the at least one electrode (1520, 1530, 1540, 1550) from which the capacitance change exceeding the designated threshold is detected.

12. A method of outputting an FM radio signal of an electronic device (210) for seating a wireless audio device (220, 230), the method comprising:
detecting an input for activating an FM radio receiving function in a state where at least one of a first wireless audio device (220) or a second wireless audio device (230) is worn in a user's ear;
activating an FM radio receiving circuit (610), based on detection of the input for activating the FM radio receiving function;
receiving an FM radio signal via the activated FM radio receiving circuit (610); and
transmitting the received FM radio signal to at least one of the first wireless audio device (220) or the second wireless audio device (230) via a short-range communication circuit (605).

13. The method of claim 12, further comprising, based on reception of a signal related to control of the FM radio signal, performing a function corresponding to the signal related to control of the FM radio signal,
wherein the input for activating the FM radio receiving function comprises at least one of an operation of a physical button provided in a first housing structure (305) and/or a second housing structure (310) of the electronic device (210), a touch input detected via a touch sensor provided in the first housing structure (305) and/or the second housing structure (310), a voice input related to activation of the FM radio receiving function, or a wireless signal related to activation of the FM radio receiving function, and
wherein the signal related to control of the FM radio signal comprises at least one of a signal related to configuration of magnitude of the FM radio signal output by the first wireless audio device (220) and/or the second wireless audio device (230), a signal related to configuration of an FM radio broadcast channel, or a signal related to activation or deactivation of the FM radio receiving function.

14. The method of claim 12 or 13, further comprising transferring the received FM radio signal to a speaker (330, 620) via an interface 640, thereby outputting the FM radio signal via the speaker (330, 620),
wherein the transmitting of the FM radio signal to at least one of the first wireless audio device (220) or the second wireless audio device (230) comprises, in case that an input for outputting the FM radio signal via at least one of the first wireless audio device (220) or the second wireless audio device (230) is detected while the FM radio signal is output via the speaker (330, 620), transmitting the FM radio signal to at least one of the first wireless audio device (220) or the second wireless audio device (230) via the short-range communication circuit (605).

15. The method of any of claims 12 to 14, wherein the electronic device (210) further comprises a touch circuit (1510) and at least one electrode (1520, 1530, 1540, 1550) electrically connected to the touch circuit (1510), and
wherein the method further comprises:
detecting a capacitance change exceeding a designated value from the at least electrode (1520, 1530, 1540, 1550) via the touch circuit (1510); and
performing a function related to the FM radio signal, the function being mapped to the at least one electrode (1520, 1530, 1540, 1550) from which the capacitance change exceeding the designated value is detected.
